# EUROPEAN PATENT APPLICATION

(11) **EP 1 868 375 A1**
(43) Date of publication of application: **19.12.2007**
(21) Application number: 06729134.4
(22) Date of filing: 15.03.2006
(51) Int. Cl.: H04N 5/243, B60R 1/00, G06T 1/00, H04N 5/225, H04N 7/18

(54) **IMAGE PROCESSING DEVICE AND METHOD, PROGRAM, AND RECORDING MEDIUM**

(30) Priority: 15.03.2005 JP 2005072795
(71) Applicant: OMRON CORPORATION, Kyoto-shi, Kyoto 600-8530 (JP)
(72) Inventor: KASASHIMA, M., OMRON CORP., 801 Minamifudodo-cho, Kyoto-shi, Kyoto 600-8530 (JP); OTA, S., OMRON CORP., 801, Minamifudodo-cho, Kyoto-shi, Kyoto 600-8530 (JP); ANDO, T., OMRON CORP., 801, Minamifudodo-cho, kyoto-shi, Kyoto 600-8530 (JP)
(74) Representative: Brykman, Georges
(86) International application number: PCT/JP2006/305113
(87) International publication number: WO 2006/109398

(57) **Abstract**

The present invention relates to an image processing apparatus, method, program and recording medium, which make it possible to remove an obstacle, which blocks the field of view, and provide an image of a pleasant field of view. An interference status detector determines whether it is necessary to correct an image obtained by an image pickup unit, and an obstacle detector detects a pixel corresponding to an obstacle in an obtained image. An obstacle removal processor, based on output from a movement status controller and an obstacle registry, replaces the pixel of the obstacle in the frame of the image to be corrected with a corresponding pixel in the chronologically previous frame, carries out correction so as to remove the obstacle from the image, and outputs the corrected image to a display unit.

## Description

### BACKGROUND OF THE INVENTION

### 1. Field of the Invention

The present invention relates to an image processing apparatus and a method, program, and recording medium, and more particularly to an image processing apparatus and a method, program and recording medium capable of removing obstacles that block a field of view, and providing an image of a pleasant field of view.

### 2. Description of the Related Art

In order to enhance visibility in areas that are considerably darker than the areas lighted up by the front headlights at night, there is a recent method for displaying an image taken with a camera or other such imaging means on a display means so that the dark areas show up. However, the problem is that when it snows or rains heavily, the snow or rain in front of the vehicle (near the camera) is lit up by the headlights, resulting in a bright image, which is brightly displayed. This causes visibility to decline significantly, making it impossible to recognize pedestrians or obstructions in front of the vehicle. For this reason, a method has been proposed for improving the forward field of view by controlling the irradiation of the lighting fixtures of a vehicle in accordance with changes in the weather and road conditions (For example, refer to Japanese Patent Laid-open No. H11-321440, hereinafter referred to as Patent Literature 1).

Also, for example, since moving objects do not show up when taking an image with a method that uses a diaphragm or the like to make the quantity of light extremely small and carries out exposure over a long period of time, stationary roads and building can be imaged, making it possible to provide an image from which moving objects such as snow and rain have been eliminated. But since the images provided are practically the same as still images, these images are not suited to monitoring and other such applications that require real-time capabilities.

When applied to monitoring and the like, which requires real-time capabilities, the differences of each pixel in the previous frame and the subsequent frame are computed, and when a difference in excess of a threshold value is detected, a pixel having a change in excess of the threshold is replaced with the data of a pixel of the same location in the previous frame. Thus, a pixel, which underwent threshold-exceeding changes due to movement, is replaced with data from the original frame. According to this method, it is possible to remove from the image falling snow, as well as vehicles and pedestrians traveling on the road, and to monitor a stationary, unmoving road, objects incidental to the road, such as a guardrail, and objects like buildings and bridges.

However, the problem with the technology of Japanese Patent Laid-open No. H11-321440 is that, although this technology can be expected to improve a deteriorated field of view in accordance with the light fixtures, the portions in front of the vehicle blocked out by the snow cannot be seen.

Further, when a monitoring device, which uses a method for replacing pixels in the same locations as those of the previous frame, is mounted in a vehicle and the scene in front of the vehicle is displayed, a situation arises in which the majority of the images in the forward direction move and change in accordance with the progress of the vehicle, resulting in these images being deleted and not displayed for most areas. Therefore, this technology cannot be utilized when the camera or subject moves. A method that simply determines when a moving object is an obstacle gives rise to these kinds of problems, thereby requiring processing for distinguishing between obstacles, like snow and rain, and objects that need to be seen and recognized.

Snow, in particular, is an obstacle, which greatly changes the brightness of a scene to be imaged, and is difficult to identify in an image because of the small space it occupies within the image, and the fact that the shape of each individual snowflake differs greatly. Further, snow that is close to the camera generates a large quantity of reflected light having a large surface area so that light, which is much brighter than objects in the forward direction, is incident on the imaging means, making it necessary for incident light control means, such as a diaphragm or shutter speed, to be used with methods that used ordinary CCD or CMOS imaging devices. When incident light control means reduces the quantity of incident light corresponding to the bright snow ahead, the image of the scene ahead is subjected to black-level clipping and does not show up. When incident light control means increases the quantity of incident light in conformance with the dark areas ahead, the snow portions give rise to phenomena such as flares and smears, which impact surrounding pixels, greatly increasing areas for which the scene ahead cannot be imaged.

### SUMMARY OF THE INVENTION

The present invention was made with situations such as these in mind, and is constituted so as to be able to remove obstacles that block the field of view, and to provide an image of a pleasant field of view.

A first image processing apparatus, which applies the present invention, comprises imaging means for obtaining an image and outputting data of the obtained image; correction determination means for determining whether to carry out correction for image data outputted from imaging means; detection means for detecting a pixel corresponding to an obstacle, which is in the image data, and which is a prescribed object that is either floating in or falling through the air; replacement means for replacing the obstacle pixels in the image data detected by detection means with other pixels; and output means for outputting image data for which the obstacle pixels have been replaced with other pixels by replacement means.

In the first image processing apparatus of the present invention, an image is obtained, the obtained image data is outputted, a determination is made as to whether the outputted image data is to be corrected, pixels corresponding to an obstacle, which is in the image data, and which is a prescribed object that is either floating in or falling through the air, is detected, the obstacle pixels detected in the image data are replaced with other pixels, and the image data for which the obstacle pixels have been replaced with other pixels is outputted.

Therefore, it is possible to provide an image from which the obstacle, which constitutes an object that interferes with the field of view, has been removed.

The above-mentioned imaging means can convert an electric charge, which is generated in response to obtained light, to an analog electric signal having a voltage value proportional to the logarithm of the number of charges for each pixel, and can output image data by converting the analog electric signal to digital data.

Imaging means, for example, is constituted by an HDRC camera.

Therefore, it is possible to obtain a high dynamic range image, and to reliably detect images of snow, which is the obstacle.

The above-mentioned imaging means can convert an electric current, which is generated in response to obtained light, to an analog electric signal having a voltage value proportional to the logarithm of the size of the electric current for each pixel, and can output image data by converting the analog electric signal to digital data.

The above-mentioned detection means can detect pixels corresponding to the obstacle based on the brightness value of the pixels of the image data, and a preset threshold value.

The above-mentioned threshold is the upper limit and lower limit threshold values of the brightness value for distinguishing between pixels corresponding to the obstacle and pixels corresponding to the background in image data, and detection means can detect pixels having a brightness value within the threshold range as pixels corresponding to the obstacle.

Therefore, it is possible to appropriately detect the obstacle by distinguishing the obstacle from the background.

The above-mentioned detection means can divide the image into a plurality of areas, and when pixels having a brightness value within the threshold range exist in the image data of all the divided areas, can detect the pixels having a brightness value within the threshold range as pixels corresponding to the obstacle.

Therefore, an object, which exists in a portion of the image, can be suppressed from being mistakenly detected as the obstacle.

The above mentioned detection means can detect pixels having a brightness value within the threshold range as pixels corresponding to the obstacle when pixels having a brightness value within the threshold range exist in the image data of all the frames of the plurality of frames obtained by imaging means.

Therefore, an object, which temporarily blocks the field of view, can be suppressed from being mistakenly detected as the obstacle.

The above-mentioned detection means can calculate the characteristic quantity of a block of data centered on pixels having a brightness value within the threshold range, compute the difference between the characteristic quantity and the characteristic quantity of a block of data of pixels corresponding to a pre-stored obstacle, and when the difference is less than a preset value, can detect the block centered on pixels having a brightness value within the threshold range as a block of pixels corresponding to the obstacle.

Therefore, it is possible to reliably detect the obstacle regardless of the amount of obstacles in an image.

The above-mentioned replacement means can replace pixels detected by detection means with pixels corresponding to the pixel detected by the detection means in a frame image, which is the image of a frame obtained by imaging means, and the image of the frame which is chronologically previous to the frame in which pixels are to be replaced.

Therefore, it is possible to generate an image completely free of the obstacle.

The first image processing apparatus of the present invention further comprises specification means for specifying a location of pixels corresponding to the pixel detected by the detection means in the image of a frame, which was obtained by the above-mentioned imaging means, and is the image of the frame, which is chronologically previous to the frame in which pixels are to be replaced, and replacement means can replace detection means-detected pixels with pixels specified by specification means.

Therefore, it is possible to provide an image from which the obstacle has been appropriately eliminated even when the image processing apparatus is moving.

The first image processing apparatus of the present invention further comprises other imaging means, and replacement means can replace pixels detected by detection means with pixels corresponding to the pixel detected by the detection means in an image, which is an image obtained by the other imaging means, and which is obtained at the same timing as the image in which pixels are to be replaced.

Therefore, it is possible to provide an image from which the obstacle has been appropriately eliminated even when traveling along a winding road.

A first image processing method, which applies the present invention, comprises a correction determination step of determining whether to carry out correction for image data outputted from imaging means, which obtains an image, and outputs data on the obtained image; a detection step of detecting pixels corresponding to an obstacle, which is in the image data, and which is a prescribed object that is either floating in or falling through the air, when determination has been made by the processing of the correction determination step that correction should be carried out for the image data; a replacement step of replacing the pixels of the obstacle in the image data detected by the processing of the detection step with other pixels; and an output step of outputting image data for which the obstacle pixels have been replaced with other pixels by the processing of the replacement step.

In the first image processing method of the present invention, a determination is made as to whether or not to carry out correction for image data outputted from imaging means, which obtains an image, and outputs the obtained image data, pixels corresponding to an obstacle, which is in the image data, and which is a prescribed object that is either floating in or falling through the air, is detected when determination has been made that correction should be carried out for the image data, pixels of the obstacle in the detected image data are replaced with other pixels, and image data in which the obstacle pixels have been replaced with other pixels is outputted.

A first program, which applies the present invention, is a program for making the image processing apparatus carry out image processing, and makes a computer execute a correction determination control step of controlling the determination as to whether to carry out correction for image data outputted from imaging means, which obtains an image, and outputs data on the obtained image; a detection control step of controlling the detection of pixels corresponding to an obstacle, which is in the image data, and which is a prescribed object that is either floating in or falling through the air, when determination has been made by the processing of the correction determination control step that correction should be carried out for the image data; a replacement control step of controlling the replacement of the pixels of the obstacle in the image data detected by the processing of the detection step with other pixels; and an output control step of controlling the output of the image data for which the obstacle pixels have been replaced with other pixels by the processing of the replacement control step.

A first recording medium, which applies the present invention, is the recording medium on which the program for making the image processing apparatus carry out image processing is recorded, and records the program, which makes a computer execute a correction determination control step of controlling the determination as to whether to carry out correction for image data outputted from imaging means, which obtains an image, and outputs data on the obtained image; a detection control step of controlling the detection of pixels corresponding to an obstacle, which is in the image data, and which is a prescribed object that is either floating in or falling through the air, when determination has been made by the processing of the correction determination control step that correction should be carried out for the image data; a replacement control step of controlling the replacement of the pixels of the obstacle in the image data detected by the processing of the detection step with other pixels; and an output control step of controlling the output of the image data for which the obstacle pixels have been replaced with other pixels by the processing of the replacement control step.

A second image processing apparatus, which applies the present invention, comprises imaging means for obtaining an image when illumination for irradiating light onto a subject is ON, and an image when the illumination is OFF, and outputting data on the obtained image; correction determination means for determining whether to carry out correction for image data outputted from imaging means; correction means for correcting the image data based on the image data obtained when illumination for irradiating light on a subject to be obtained by imaging means was ON and the image data obtained when the illumination was OFF; and output means for outputting image data corrected by correction means.

In the second image processing apparatus of the present invention, an image when illumination for irradiating light onto a subject is ON, and an image when the illumination is OFF are obtained, the obtained image data is outputted, a determination is made as to whether to carry out correction for the outputted image data, the image data is corrected based on the image data obtained when illumination for irradiating light on a subject to be obtained is ON and the image data obtained when the illumination was OFF, and the corrected image data is outputted.

Therefore, it is possible to provide a user with an image of a pleasant field of view.

The above-mentioned correction means can correct the image data so that, of the image data obtained when the illumination for irradiating light onto a subject to be obtained by imaging means is ON, and the image data obtained when the illumination is OFF, the image data obtained when the illumination is OFF is outputted to output means.

Therefore, it is possible to display an image, which appears natural, without any loss of visibility for the user.

The second image processing apparatus of the present invention further comprises detection means for detecting pixels corresponding to an obstacle, which is in the above-mentioned image data, and which is a prescribed object that is either floating in or falling through the air, and detection means can, based on based on image data obtained when illumination for irradiating light on a subject to be obtained by imaging means is ON and image data obtained when the illumination is OFF, compute the difference between the brightness values of the respective corresponding pixels in both sets of image data, and detect pixels for which the difference in brightness values exceeds a preset value as being pixels that correspond to the obstacle, and correction means can replace the pixels of the obstacle in the image data detected by detection means with other pixels.

Therefore, it is possible to detect an obstacle using a simple constitution.

A second image processing method, which applies the present invention, comprises a correction determination step of determining whether correction will be carried out for image data outputted from imaging means, which obtains an image when illumination for irradiating light onto a subject is ON, and obtains an image when the illumination is OFF, and outputs data on the obtained image; correction step of correcting the image data based on the image data obtained when illumination for irradiating light on a subject to be obtained by imaging means was ON and image data obtained when the illumination was OFF, when determination has been made by the processing of the correction determination step that correction is to be performed for the image data; and an output step of outputting image data corrected by the processing of the correction step.

In the second image processing method of the present invention, an image when illumination for irradiating light onto a subject is ON, and an image when the illumination is OFF are obtained, a determination is made as to whether to carry out correction for the image data outputted from imaging means, which outputs the obtained image data, and when determination has been made that correction should be performed for the image data, the image data is corrected based on the image data obtained when illumination for irradiating light on a subject to be obtained by imaging means was ON and the image data obtained when the illumination was OFF, and the corrected image data is outputted.

A second program, which applies the present invention, is a program for making the image processing apparatus carry out image processing, and makes a computer execute a correction determination control step of controlling a determination as to whether to carry out correction for image data outputted from imaging means, which obtains an image when illumination for irradiating light onto a subject is ON and an image when the illumination is OFF, and outputs data on the obtained image; a correction control step of controlling the correction of the image data based on the image data obtained when illumination for irradiating light on a subject to be obtained by imaging means was ON and image data obtained when the illumination was OFF, when determination has been made by the processing of the correction determination control step that correction is to be performed for the image data; and an output control step of controlling the output of image data corrected by the processing of the correction control step.

A second recording means, which applies the present invention, is a recording means on which the program for making the image processing apparatus carry out image processing is recorded, and records the program for making a computer execute the correction determination control step of controlling a determination as to whether to carry out correction for image data outputted from imaging means, which obtains an image when illumination for irradiating light onto a subject is On and an image when the illumination is OFF, and outputs data on the obtained image; the correction control step of controlling the correction of the above-mentioned image data based on the image data obtained when illumination for irradiating light on a subject to be obtained by the above-mentioned imaging means was ON and image data obtained when the above-mentioned illumination was OFF, when determination has been made by the processing of the correction determination control step that correction is to be performed for the above-mentioned image data; and the output control step of controlling the output of image data corrected by the processing of the above-mentioned correction control step.

According to the present invention, it is possible to provide an image of a pleasant field of view. In particular, it is possible to remove an obstacle, which blocks the field of view, and to provide an image of a pleasant field of view.

### BRIEF DESCRIPTION OF THE DRAWINGS

Fig. 1 is a block diagram showing an example of the constitution of a monitoring device, which applies the present invention;
Fig. 2 is a diagram showing an example of the constitution of the image pickup unit of Fig. 1;
Fig. 3 is a diagram illustrating the sensitivity characteristics of the image pickup unit;
Fig. 4 is a block diagram showing an example of the constitution of the control unit of Fig. 1;
Fig. 5 is a flowchart for explaining an example of image correction processing;
Fig. 6 is a flowchart for explaining an example of correction determination processing;
Fig. 7 is a flowchart for explaining an example of obstacle detection processing;
Fig. 8 is a diagram showing an example of an image in which the obstacle has been obtained;
Fig. 9 is a diagram showing an example in which the image of Fig. 8 is divided into a plurality of areas;
Fig. 10 is a diagram showing an example of a pixel histogram;
Fig. 11 is a flowchart for explaining an example of mode A processing;
Fig. 12 is a flowchart for explaining an example of mode B processing;
Fig. 13 is a diagram showing an example of consecutive frames;
Fig. 14 is a diagram showing an example of a pixel histogram;
Fig. 15 is a diagram showing an example of a pixel histogram;
Fig. 16 is a diagram illustrating an example of mode C processing;
Fig. 17 is a flowchart for explaining an example of feature determination processing;
Fig. 18 is a flowchart for explaining another example of obstacle detection processing;
Fig. 19 is a diagram showing an example of an image obtained when illumination was ON;
Fig. 20 is a diagram showing an example of an image obtained when illumination was OFF;
Fig. 21 is a diagram showing an example of an image from which the obstacle has been removed;
Fig. 22 is a flowchart for explaining an example of obstacle removal processing;
Fig. 23 is a diagram showing an example of the image of a frame to be corrected;
Fig. 24 is a diagram showing an example of the image of the chronologically previous frame;
Fig. 25 is a diagram showing an example of an image in which pixels have been replaced;
Fig. 26 is a diagram showing another example of the image of a frame to be corrected;
Fig. 27 is a diagram showing another example of the image of the chronologically previous frame;
Fig. 28 is a diagram showing another example of an image in which pixels have been replaced;
Fig. 29 is a block diagram showing an example of another constitution of a monitoring device, which applies the present invention;
Fig. 30 is a flowchart for explaining an example of obstacle removal processing by the monitoring apparatus of Fig. 29; and
Fig. 31 is a block diagram showing an example of the constitution of a personal computer.

### DESCRIPTION OF THE PREFERRED EMBODIMENTS

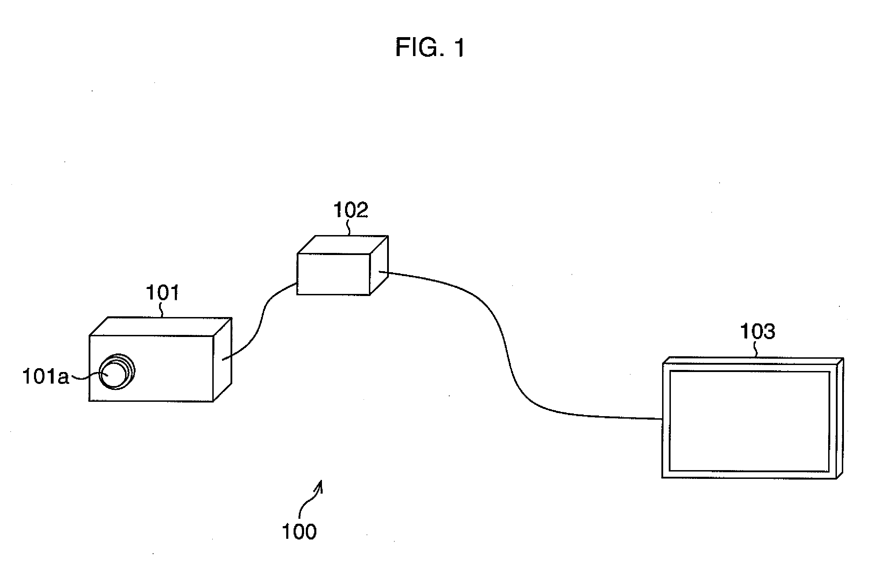

The embodiments of the present invention will be explained below by referring to the figures. Fig. 1 is a block diagram showing an example of the external constitution of an embodiment of a monitoring apparatus 100, which applies the present invention. The monitoring apparatus 100, for example, is a device, which is mounted to an automobile or the like to provide a pleasant image of the field of view to a user by imaging the exterior of the vehicle in the forward direction, and is constituted by an image pickup unit 101, a control unit 102, and a display unit 103.

The image pickup unit 101, for example, is constituted by a camera or the like, picks up an image (can be either a video image or a still image) on the basis of light inputted from a lens 101a, and outputs the obtained image data to the control unit 102. Furthermore, when the image pickup unit 101 obtains a video image, the obtained image data is outputted as digital data coded in frame units.

The control unit 102 performs prescribed processing on the image data supplied from the image pickup unit 101, corrects the image data by removing an obstacle and so forth, and outputs a signal corresponding to the corrected image data to the display unit 103.

Here, an obstacle floating in the air is an object that exist in the air, such as rain or snow falling through the air, or insects or the like flying through the air, and is an object that obstructs a person's field of view.

Further, the control unit 102, for example, is connected to an external information apparatus, such as an automobile's electronic control unit (microcomputer) or the like, and acquires the output status of various sensors connected to the information apparatus as needed.

The display unit 103, for example, is constituted by an LCD (Liquid Crystal Display), and displays an image corresponding to the signal supplied from the control unit 102.

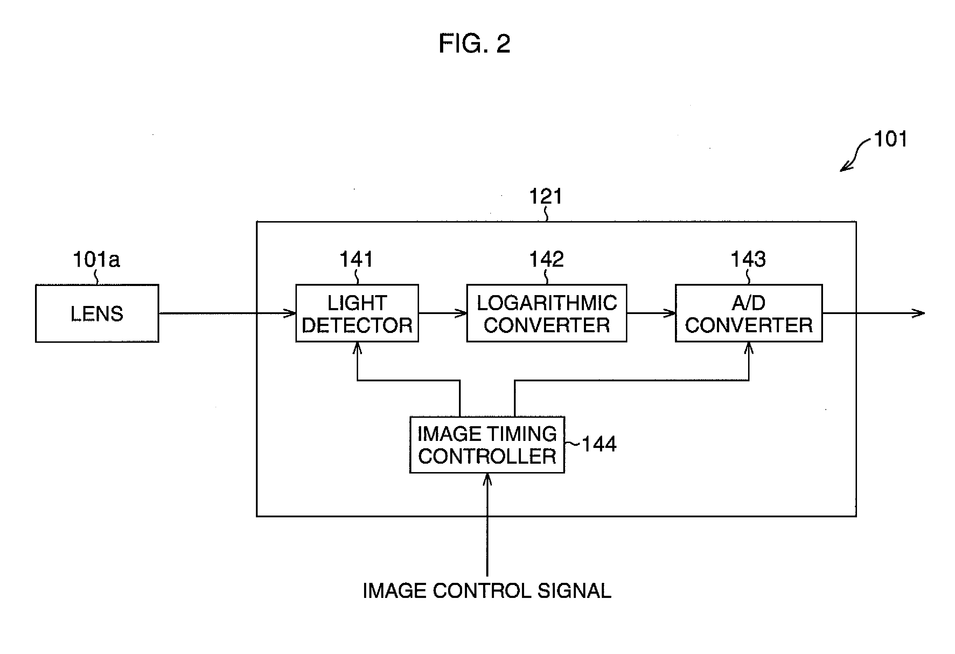

Fig. 2 is a block diagram showing an example of the constitution of the image pickup unit 101. As shown in this figure, the image pickup unit 101 is constituted such that light output from a lens 101a is outputted to an imaging controller 121. The imaging controller 121, for example, is an HDRC (High Dynamic Range CMOS (Complementary Metal Oxide Semiconductor)) or other such logarithmic conversion-type imaging device, and comprises a light detector 141, logarithmic converter 142, A/D converter 143, and image timing controller 144.

The light of a subject, which enters through the lens 101a, forms an image on a not-shown light-detecting surface of the light detector 141 of the imaging controller 121.

The light detector 141, for example, comprises a plurality of light-receiving devices, such as photodiodes, and converts subject light, which is formed into an image via the lens 101a, into electrical charges in accordance with the intensity of the light (light quantity), and stores the converted charges. The light detector 141 supplies the stored charges to the logarithmic converter 142 in synch with a control signal supplied from the image timing controller 144. Furthermore, the light detector 141 can also be constituted such that the converted electrical charges are supplied as-is to the logarithmic converter 142 without being stored.

The logarithmic converter 142, for example, is constituted by a plurality of MOSFETs (Metal Oxide Semiconductor Field Effect Transistors). The logarithmic converter 142 makes use of the sub-threshold property of the MOSFET to convert an electrical charge (or current) supplied from the light detector 141 to an analog electric signal, which has a voltage value proportional to the logarithm of the number of charges (or current strength) of each pixel. The logarithmic converter 142 supplies the converted analog electric signal to the A/D converter 143.

The A/D converter 143 converts the analog electrical signal to digital image data in synch with a control signal supplied from the image timing controller 144, and supplies the converted image data to an image processing apparatus 112. Thus, the pixel value of each pixel of the image data outputted from the imaging controller 121 constitutes a value proportional to a value arrived at by logarithmically converting subject light incident on the light detector 141.

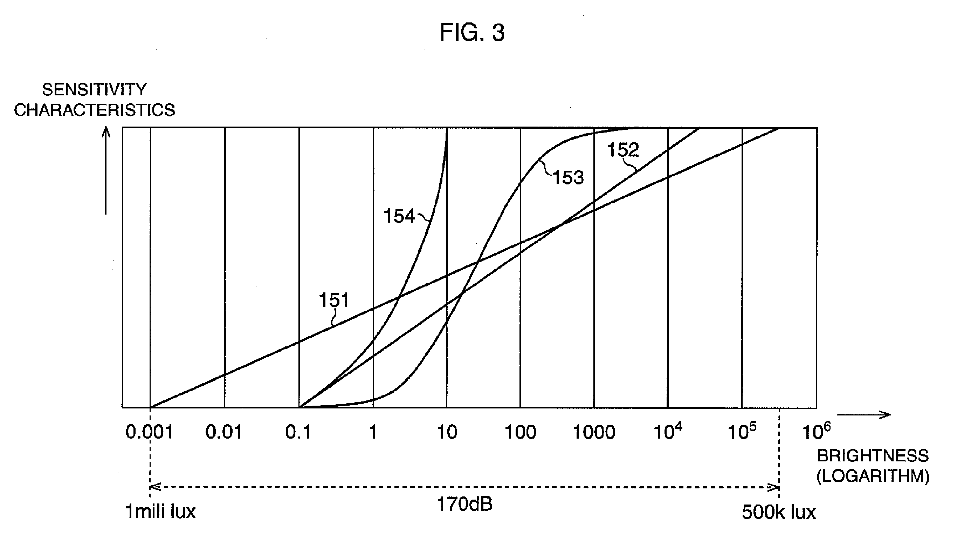

Fig. 3 is a graph showing the sensitivity characteristics of the HDRC imaging controller 121, a CCD (Charge Coupled Device) imaging device, silver halide film, and the human eye. The horizontal axis of this figure shows the logarithm of the luminance of the incident light (measured in units of lux), and the vertical axis shows sensitivity. Line 151 shows the sensitivity characteristics of the imaging controller 121, line 152 shows the sensitivity characteristics of the human eye, line 153 shows the sensitivity characteristics of silver halide film, and line 154 shows the sensitivity characteristics of the CCD imaging device. Furthermore, the sensitivity characteristics of a conventional CMOS imaging device closely resemble the sensitivity characteristics of the CCD imaging device shown in line 154.

The imaging controller 121, by outputting image data having pixel values that are practically proportional to the logarithm of the quantity of light of the incident subject light as described above, has a dynamic range that is broader than the dynamic ranges of the CCD imaging device, silver halide film and the human eye, extending approximately 170dB, from around 1 millilux to around 500 kilolux, which is a higher luminance than the brightness of sunlight, without saturating the capacities of the photodiodes or MOSFETs constituting the imaging controller 121.

That is, since the logarithmic converter 142 outputs data comprising a brightness value (or pixel value), which is nearly proportional to the logarithm of the incident quantity of light as described above, when the incident quantity of light becomes larger, the capacity of the photodiodes, MOSFETs and other such devices, which constitute the imaging controller 121, do not become saturated, and the current or applied voltage flowing to the respective devices does not exceed the range in which it is possible to perform outputting that accords with the inputs of the respective devices. Therefore, it is possible to obtain a brightness value (or pixel value), which for the most part accurately accords with the fluctuations of the incident quantity of light within an imageable brightness range. Furthermore, the dynamic range of the imaging controller 121 is not limited to the 170dB mentioned above, but rather a required dynamic range, roughly 100dB or 200dB, can be utilized in accordance with the intended use.

Therefore, even if the image pickup unit 101, which uses the imaging controller 121, does not adjust the incident quantity of light by adjusting a diaphragm or shutter speed, brightness clipping, whereby a pixel value corresponding to a light portion of a subject is clipped to the maximum value of the pixel value capable of being outputted by the imaging device, and a pixel value corresponding to a dark portion of a subject is clipped to the minimum value of the pixel value capable of being outputted by the imaging device, does not occur. That is, the image pickup unit 101 can faithfully image minute changes in the brightness of a subject without whiting out the light portions or blacking out the dark portions of the subject.

For example, even if the sun should enter into the angular field of view when imaging the scene in front of the vehicle from inside the vehicle in broad daylight, the image pickup unit 101, which uses the imaging controller 121, can acquire an image, which faithfully reproduces the road situation in the forward direction and the sun, without adjusting the incident quantity of light. Further, even if the headlights of an oncoming vehicle shine in from the front when imaging the scene in front of the vehicle from inside the vehicle at night, the image pickup unit 101 can acquire an image, which faithfully reproduces the entire scene, from the light of the headlights of the oncoming vehicle to the portions not lit up by the headlights of its own vehicle, without adjusting the incident quantity of light.

Further, because it is not necessary for the image pickup unit 101, which uses the imaging controller 121, to carry out adjustments to the incident quantity of light, when there is an area in the image data outputted from the image pickup unit 101 in which the brightness of a subject fluctuated and an area in the image data outputted from the image pickup unit 101 in which this brightness did not fluctuate while imaging two frames, the pixel values corresponding to the area, in which the brightness fluctuated, fluctuate, and the pixel values corresponding to the area in which the brightness did not fluctuate, do not fluctuate hardly at all. Therefore, the pixel values (hereinafter, may also be called difference values) of the respective pixels of data (hereinafter, called difference data), which holds the differences in image data between frames, constitute values in which a fluctuation of object brightness is faithfully reflected for the most part.

Conversely, an imaging apparatus, which uses a CCD imaging device for which the dynamic range is narrower than that of the human eye, must adjust the incident quantity of light in accordance with the brightness of the subbject, and therefore, for example, when there are areas in which the brightness of the subject fluctuates and areas in which the brightness does not fluctuate while imaging two frames, the pixel value corresponding to the area in which the brightness did not fluctuate may also fluctuate. Therefore, the difference values of the respective pixels of the difference data may not constitute values in which the fluctuations of the brightness of the subject are faithfully reflected.

Further, by virtue of the fact that the pixel values of the image data outputted from the image pickup unit 101 become values that are proportional for the most part to the logarithm of the quantity of light of the subject, a histogram, which shows the distribution of pixel values of the image data of this subject, regardless of the luminosity (luminance) of the illumination shined onto the subject, is practically the same shape as a histogram showing the distribution of the reflectance of this subject. For example, when a subject, for which the ratio of the maximum reflectance portion to the minimum reflectance portion is 10:1, is imaged by illuminating it with illumination, for which the luminance differs approximately 100 fold between the first illumination and the second illumination, the widths of histograms showing the distributions of pixel values of the image data of the first illumination and image data of the second illumination constitute practically the same values (1 = log1010). Conversely, when the pixel values of image data are proportional to the quantity of light of the subject, the widths of the histograms showing the distribution of pixel values of the image data of the first illumination and the image data of the second illumination differ approximately 100 fold.

Therefore, when the luminance of the illumination, which is shined onto the subject, is practically equal, when the luminance of the illumination changes, the pixel values of the image data of the subject will change practically equally regardless of the distribution of the brightness (reflectance) of the subject. For example, when there are two areas within the subject where the ratio of the brightness is 100:1, when the brightness of the subject fluctuates practically equally +5% in accordance with a change in the illuminance of the illumination, the fluctuation values of the pixel values corresponding to the two areas become practically the same value (log101.05). Conversely, when the pixel values of the image data are proportional to the quantity of light of the subject, the fluctuation values of the pixel values corresponding to the above-mentioned two areas differ roughly 100 fold.

By contrast, as shown by line 154 and line 153, the sensitivity characteristics of the CCD imaging device and silver halide film are not proportional to the illuminance of the incident light due to such factors as gamma characteristics. Therefore, even if the distribution of the quantity of light (illuminance) of the incident light for histograms showing the distribution of pixel values of image data obtained using either a CCD imaging device or silver halide film are alike, the shapes thereof will change due to the size of the quantity of light (the intensity of the illuminance).

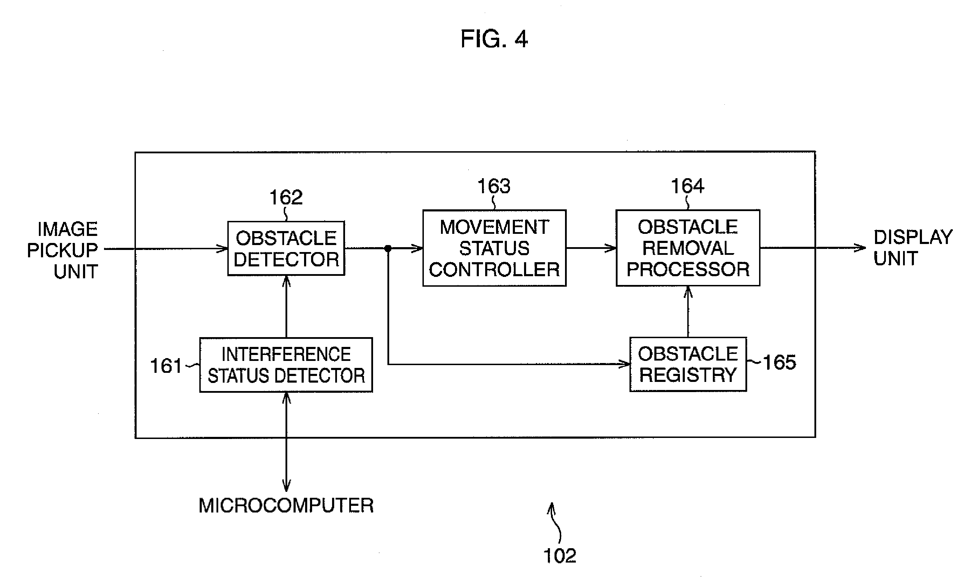

Fig. 4 is a block diagram showing an example of the constitution of the control unit 102. In this figure, an interference status detector 161, for example, detects whether or not there is an obstacle (snow) that should be removed from the image, based on information acquired from the automobile's microcomputer. An obstacle detector 162 detects an obstacle inside an image supplied from the image pickup unit 101.

A movement status controller 163 detects the movement status of the automobile and the movement status of the obstacle, detects the physical relationship between the obstacle and the background in the image from the two movement statuses, and based on the physical relationship of the two, determines a frame in which there exists pixels that should be replaced pursuant to correction, and determines the pixels to be replaced.

An obstacle registry 165 stores obstacle characteristic quantity data in advance, and as needed, detects the degree of agreement between the obstacle characteristic quantity detected by the obstacle detector 162 and the obstacle characteristic quantity stored inside itself.

An obstacle removal processor 164 performs processing for replacing pixels corresponding to an obstacle (removes the obstacle) for image data supplied from the image pickup unit 101, based on the results of processing by the obstacle detector 162, movement status controller 163 and obstacle registry 165, and outputs a signal corresponding to the corrected image data to the display unit 103.

Furthermore, the respective units that make up the control unit 102 can be constituted by hardware, such as a semiconductor integrated circuit, which incorporates a logic processor and storage unit for realizing the various above-mentioned functions, and/or the control unit 102 can be constituted from a computer or the like, and the respective units described hereinabove can be constituted as functional blocks realized by software processed by the computer.

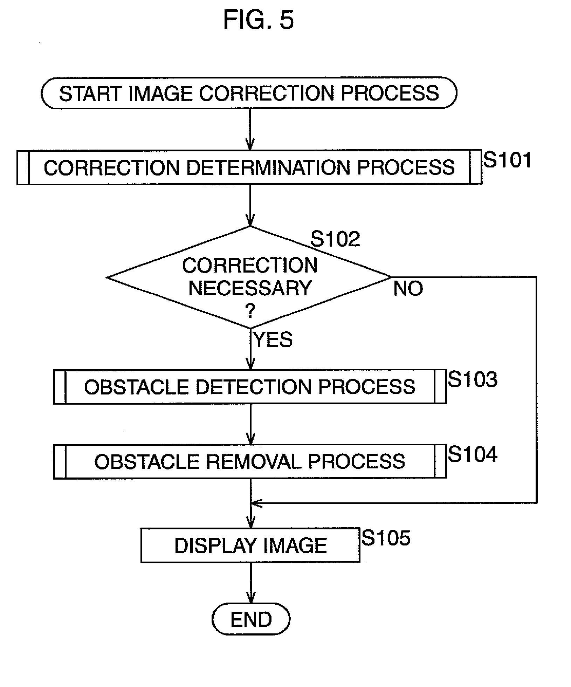

Next, the image correction process by the monitoring apparatus 100 will be explained by referring to the flowchart of Fig. 5. It is supposed here that the monitoring apparatus 100 is mounted in an automobile, and that the image pickup unit 101 obtains an image of a scene in front of the automobile, and displays this image on the display unit 103, and also treats snow as the obstacle, and carries out display by removing the snow from the obtained image.

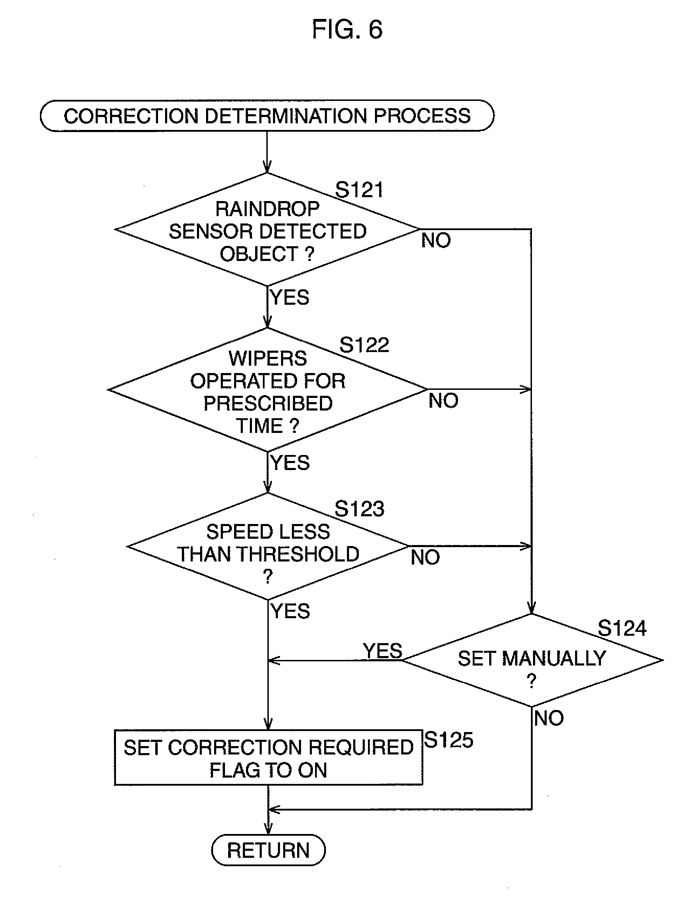

In Step S101, the control unit 102 executes a correction determination process, which will be explained below by referring to Fig. 6. Consequently, a determination is made as to whether or not image data supplied from the image pickup unit 101 needs to be corrected.

In Step S102, the control unit 102 determines whether the results of processing in Step S101 determined that correction is required, and when it was determined that correction is required, processing proceeds to Step S103.

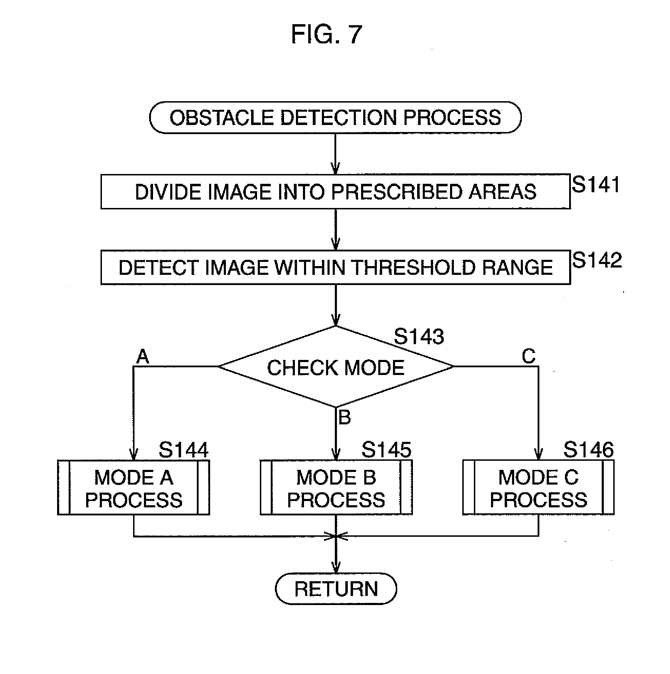

In Step S103, the control unit 102 executes an obstacle detection process, which will be explained hereinbelow by referring to Fig. 7. Consequently, a pixel (or a block of pixels) corresponding to an obstacle in the image data supplied from the image pickup unit 101 is detected.

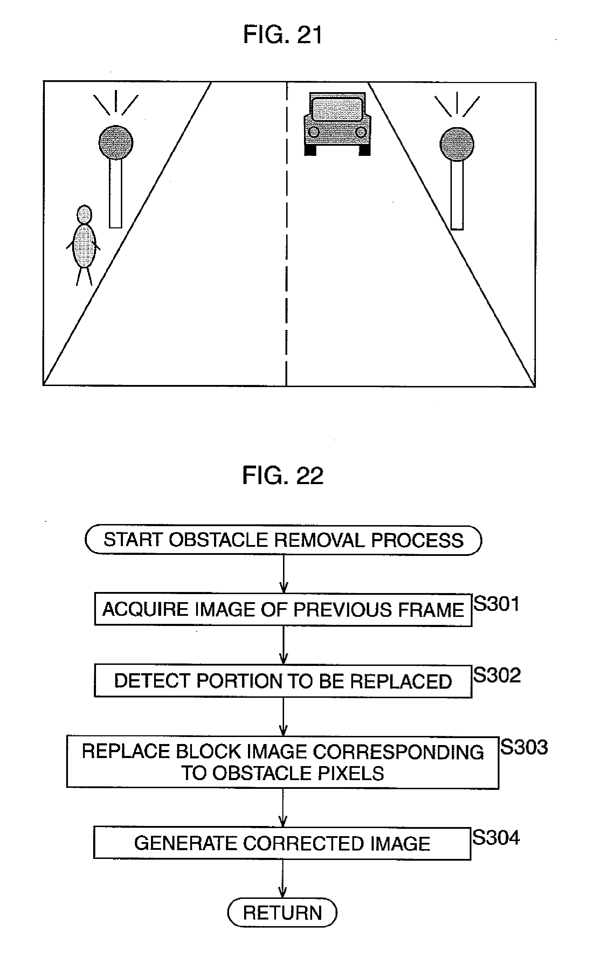

In Step S104, the control unit 102 executes an obstacle removal process, which will be explained hereinbelow by referring to Fig. 22. Consequently, the obstacle detected by the processing on Step S103 is eliminated from the image.

In Step S104, the control unit 102 outputs a signal corresponding to the image data to the display unit 103, and displays the image.

Furthermore, when it is determined in Step S102 that correction is not required, the processing of Steps S103 and S104 is skipped, and the image obtained by the image pickup unit 101 is displayed without being corrected.

Image correction processing is carried out in this way.

Next, the correction determination processing of Step S101 in Fig. 5 will be explained in detail by referring to the flowchart of Fig. 6.

In Step S121, the interference status detector 161 acquires raindrop sensor output information from the automobile's microcomputer, and determines whether the sensor has detected an object (snow, rain, or the like), and when it is determined that an object has been detected, proceeds to Step S122.

In Step S122, the interference status detector 161 determines whether the windshield wipers operated for a preset time (for example, one minute), based on information acquired from the automobile's microcomputer, and when it is determined that the windshield wipers operated for the prescribed time, processing proceeds to Step S123. For example, even if it was determined in the processing of Step S121 that the raindrop sensor had detected an object, there is the possibility, for example, that it was a temporary obstacle resulting from splashed water or the like, and is not limited to a falling obstacle (snow). Accordingly, a further determination is made as to whether the windshield wipers operated for a prescribed time period.

In Step S123, the interference status detector 161 determines if the vehicle speed is less than a threshold based on information acquired from the automobile's microcomputer, and when it is determined that the vehicle speed is less than the threshold, processing proceeds to Step S125. The belief is that vehicle speed becomes slower than normal when it is snowing, and so a further determination is made as to whether or not vehicle speed is less than the threshold.

In Step S125, the interference status detector 161 sets a correction required flag, which denotes that image correction is needed, to ON. In the processing of Step S102 of Fig. 5, a determination is made as to whether this correction flag is ON, and when the correction flag is ON, it is determined that correction is required.

Conversely, when it is determined in Step S121 that the sensor did not detect an object, or when it is determined in Step S122 that the windshield wipers did not operate for the prescribed time period, or when it is determined in Step S123 that the vehicle speed is not less than the threshold, processing proceeds to Step S124.

In Step S124, the interference status detector 161 determines whether the correction required setting was made manually, and when it is determined that the correction required setting was made manually, processing proceeds to Step S125. For example, when the user (driver) instructs that the image be corrected by pressing an operation button not shown in the figure, the correction required flag is set to ON. When it is determined in Step S124 that the correction required setting was not made manually, the processing of Step S125 is skipped, and processing ends.

A correction determination is carried out in this way.

Next, the obstacle detection processing of Step S103 of Fig. 5 will be explained in detail by referring to the flowchart of Fig. 7.

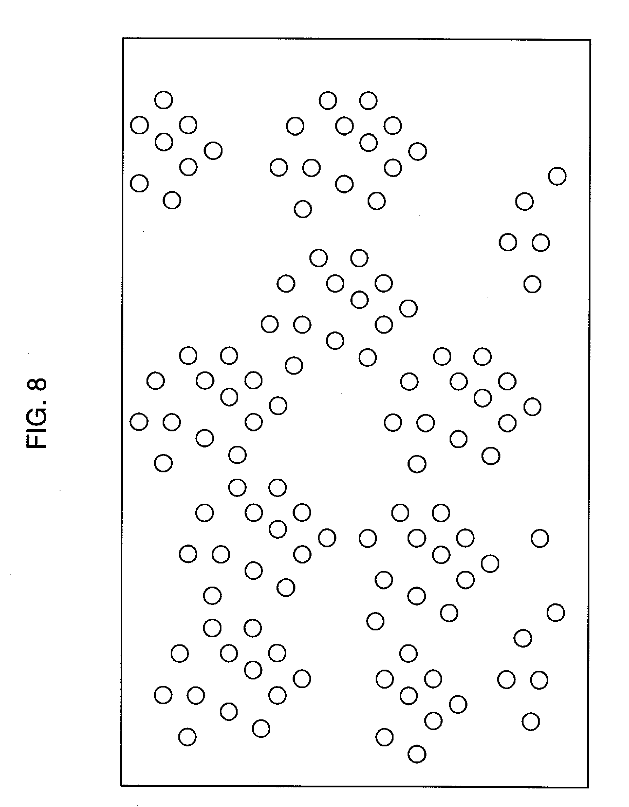

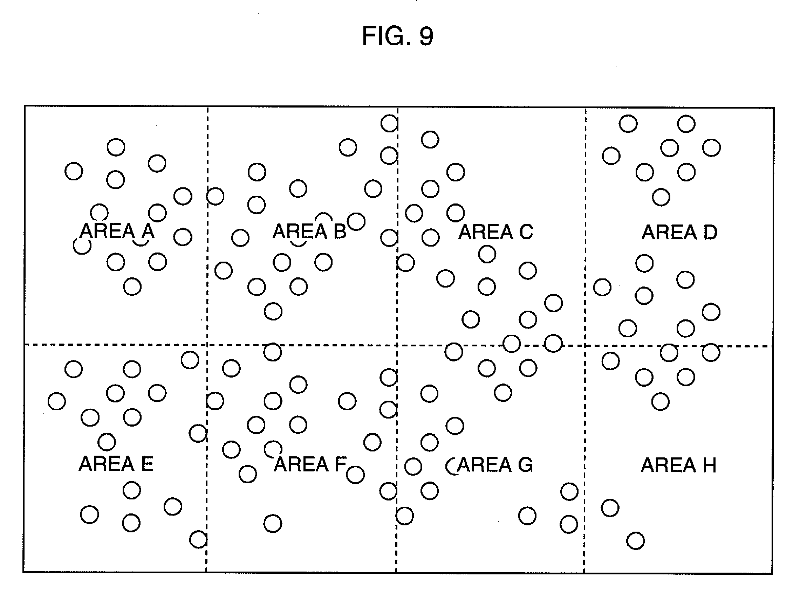

In Step S141, the obstacle detector 162 divides an image obtained by the image pickup unit 101 into prescribed areas. Consequently, for example, an image like that shown in Fig. 8 is divided as shown in Fig. 9. Furthermore, in Figs. 8 and 9, it is assumed that the portions denoted by white dots in the figures are snow, which is the obstacle. In Fig. 9, the image is divided into 8 areas, area A through area H.

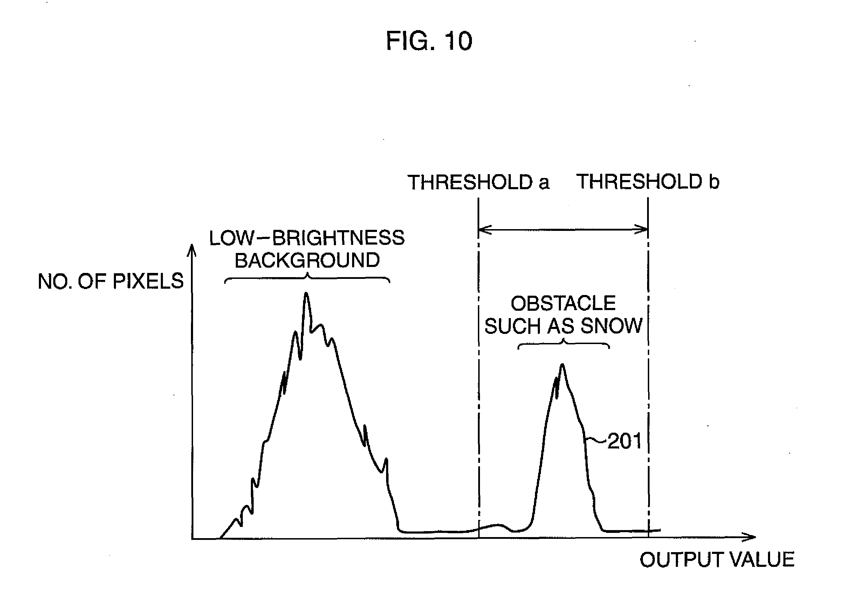

In Step S142, the obstacle detector 162 detects pixels, which exist in the image data within a threshold range. The relationship between the pixel values (pixel brightness values) and the number of pixels in an image of exterior of a vehicle when it is snowing can be graphed as shown in Fig. 10. In Fig. 10, the horizontal axis represents output values (pixel values), the vertical axis represents the number of pixels, and the distribution of the pixels (histogram) is shown by line 201. As shown in this figure, the respective peaks of line 201 are formed in the low output value (pixel value) part in the left side of the figure, and in the high output value (pixel value) part in the right side of the figure.

The peak in the left side of the figure is the result of pixels corresponding to the low-brightness background in the image, and the peak in the right side of the figure is the result of pixels corresponding to snow, which is the obstacle. Threshold a and threshold b are the lower and upper limits, respectively, of the pixel values corresponding to the snow, which is the obstacle, and are preset values suitable for distinguishing between the background and the obstacle. Therefore, there is a high likelihood that a pixel, which has a value that is greater than threshold a but less than threshold b (a pixel within the threshold range), is the obstacle pixel. Threshold a and threshold b, for example, are established based on a pixel value histogram prepared on the basis of image data acquired by imaging a snowy image beforehand.

Further, a threshold is not necessarily fixedly established, but rather can be dynamically set in accordance with the weather. For example, since the intensity of sunlight will differ on a clear day and a cloudy day (or during the day and at night), the brightness value of the pixels in image data obtained by the image pickup unit 101 can differ even for the same object. In a case like this, a suitable threshold for distinguishing between the background and the obstacle can be selected (can be dynamically set) based on the brightness value of the object, which is observed in the image at all times, and for which the reflectance has been stored in advance (for example, the surface of the road).

For example, when the image pickup unit 101 is mounted in the front of the automobile, the road surface (asphalt) constantly appears at the bottom of the obtained image. Therefore, when the relationship of the brightness levels of snow and the road surface in images obtained beforehand under a plurality of different weather conditions (for example, the difference of the brightness values) is stored in advance, and the brightness of the obtained images differs in accordance with the weather, the brightness value of pixels corresponding to the surface of the road can be calculated, and pixels corresponding to snow (the obstacle) can be detected based on the relationship between the brightness value of the road surface and the brightness value of the snow.

Furthermore, a pixel within the threshold range detected by the processing of Step S142 can also be detected as-is as a pixel corresponding to the obstacle. In this case, the processing of Steps S143 through S146, which will be explained hereinbelow, can be omitted.

In Step S143, the obstacle detector 162 checks the mode set in the monitoring apparatus 100. Here, a mode, for example, is established by the user beforehand for selecting the method for detecting the obstacle, and is arbitrarily set in accordance with the way snow falls, and the characteristics of the image pickup unit 101.

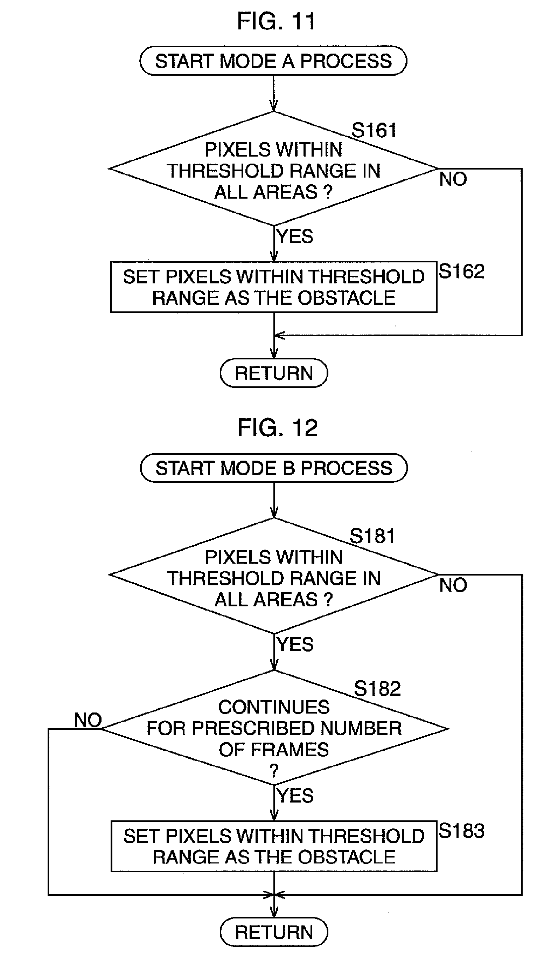

When it is determined in Step S143 that mode A has been set, processing proceeds to Step S144, and the obstacle detector 162 executes mode A processing. The mode A processing of Step S144 of Fig. 7 will be explained in detail here by referring to the flowchart of Fig. 11.

In Step S161, the obstacle detector 162 determines whether pixels exist within the threshold range in all the areas. At this time, for example, a determination is made as to whether or not pixels having values within the threshold range exist inside all the above-mentioned areas A through H by referring to Fig. 9.

When it is determined in Step S161 that pixels within the threshold range exist in all the areas, processing proceeds to Step S162, and the obstacle detector 162 sets the pixels having values within the threshold range as pixels of the image of the obstacle.

A pixel having a value within the threshold range is a pixel corresponding to a luminous image, which has a relatively high brightness value, and, for example, can be considered to be a white object. However, when an image pixel like this is not a portion of an image, but, for example, exists in all of the areas A through H of Fig. 9 (is distributed over a wide range), the image corresponding to these pixels is most likely snow, and therefore, pixels having values within the threshold range are treated as the obstacle.

Conversely, when it is determined in Step S161 that a pixel within the threshold range does not exist in all the areas, processing in Step S162 is skipped.

Specifically when it is determined that a pixel within the threshold range does not exist in all the areas, pixels corresponding to a luminous image with a high brightness value are not in the entire image, but rather exist in a portion of the image, and therefore, since there is a high likelihood that the image corresponding to these pixels is a building, for example, pixels having values within the threshold range are not set as the obstacle.

The detection of obstacles is carried out in this way.

According to obstacle detection using mode A processing described above, for example, when a white truck is traveling in front of the automobile mounted with the monitoring apparatus 100, luminous image pixels having a high brightness value will be determined to exist in all the areas, and there will be a danger of erroneously setting the white truck as the obstacle (snow). For example, when the image pickup unit 101 is constituted using a highspeed camera, there is a danger that detection using mode A processing will result in erroneous obstacle detection, making it necessary to take further steps to enable the obstacle to be accurately detected. Thus, when the image pickup unit 101 is constituted using a highspeed camera, mode B processing is executed instead of mode A processing. That is, in Step S143 of Fig. 7, it is determined that mode B is set, processing proceeds to Step S145, and mode B processing is executed.

Mode B processing of Step S145 of Fig. 7 will be explained in detail by referring to Fig. 12.

Since the processing of Step S181 is the same processing of the processing of Step S161 of Fig. 11, a detailed explanation will be omitted. When it is determined in Step S181 that pixels within the threshold range exist in all the areas, processing proceeds to Step S182.

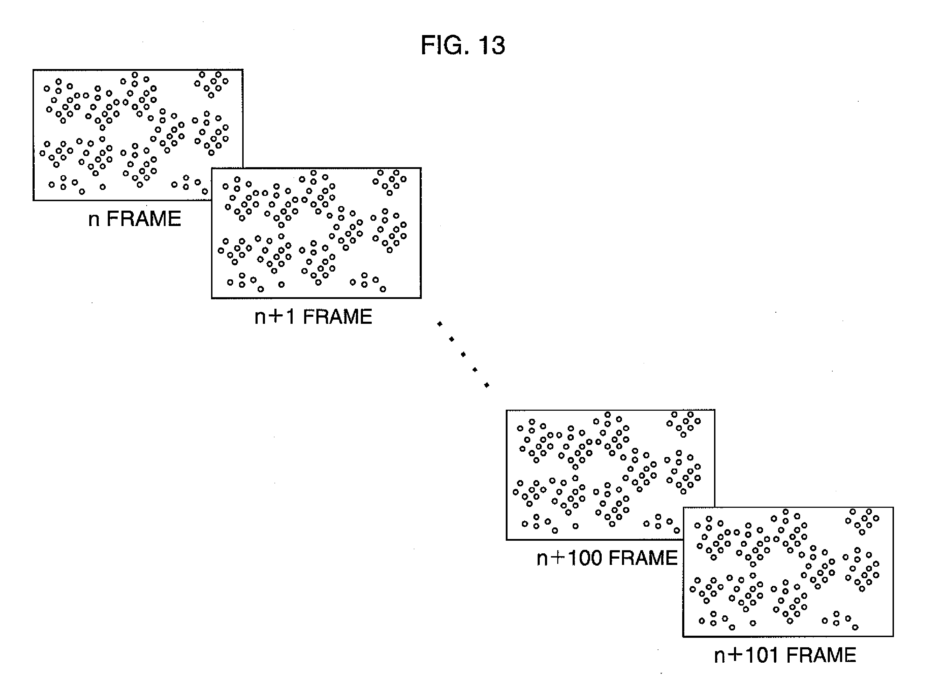

In Step S182, the obstacle detector 162 determines whether or not the state in which pixels within the threshold range exist in all the areas continues for a prescribed number of frames (for example, from tens to hundreds of frames). For example, when an image in which it is snowing in all the frames from the nth frame through the (n + 101)th frame is recorded as shown in Fig. 13, it is determined in Step S182 that the state in which pixels within the threshold range exist in all the areas continues for the prescribed number of frames, and processing proceeds to Step S183.

Conversely, when the state in which pixels within the threshold range exist in all the areas does not continue for the prescribed number of frames, the processing of Step S183 is skipped.

Since the processing of Step S183 is the same processing as that of Step S162 of Fig. 11, a detailed explanation will be omitted.

Obstacle detection is carried out in this way. Since the constitution is such that the obstacle is detected by determining whether a state in which pixels within the threshold range exist in all the areas continues for the prescribed number of frames, for example, when the image pickup unit 101 is constituted using a highspeed camera, mistakenly detecting a luminous object (for example, a white truck), which temporarily blocks the field of view in front of an automobile mounted with the monitoring apparatus 100 as the obstacle is deterred.

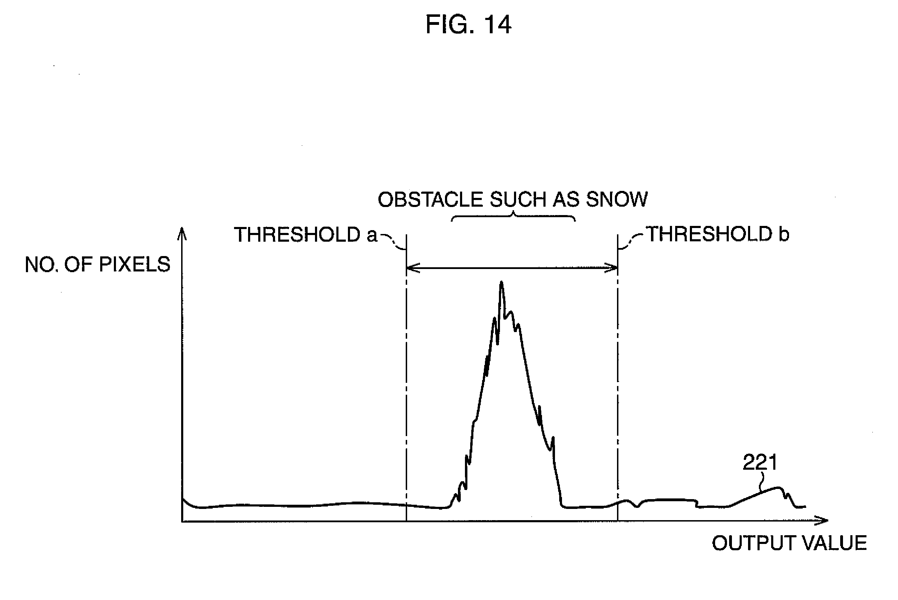

However, the characteristics of histograms of the pixels of images of when it is snowing will differ for a heavy snowfall (the amount of falling snow per unit of time is large) and for a light snowfall (the amount of falling snow per unit of time is small). Fig. 14 is a diagram showing a histogram of the pixels of an image during a heavy snowfall.

In Fig. 14, the horizontal axis represents the output value (pixel value), and the vertical axis represents the number of pixels the same as in Fig. 10, and the distribution of the pixels (histogram) is shown by line 221. As shown in this figure, the peak of line 221 is formed in the center of the figure by the obstacle (snow). Since most of the image will be displayed white by the snow in the case of a heavy snowfall, there is a high likelihood that the pixel output values will be concentrated, and that the peak of line 221 will be formed within the threshold range (the output values between threshold a and threshold b).

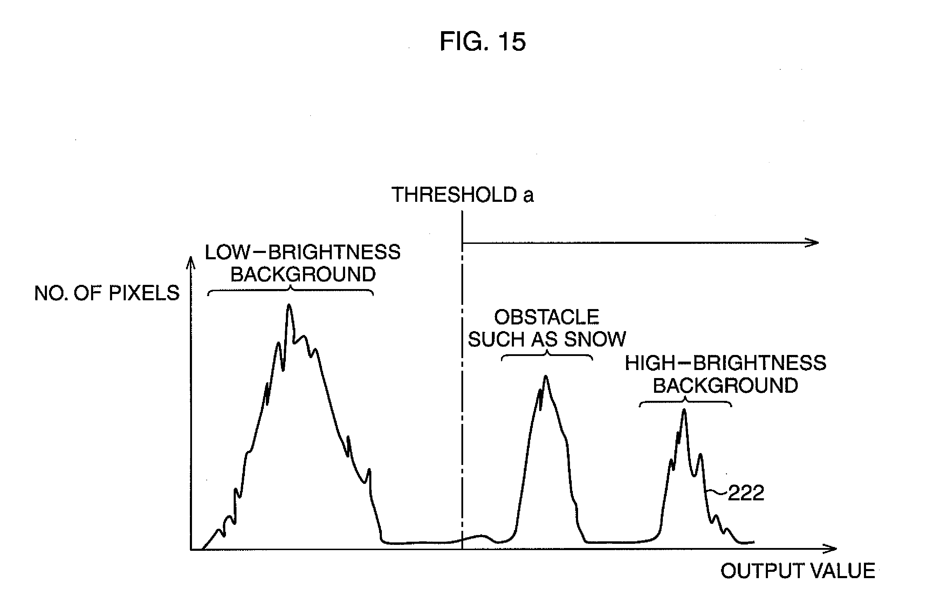

Conversely, Fig. 15 is a diagram showing a histogram of the pixels of an image during a light snowfall. In Fig. 15, the horizontal axis represents the output value (pixel value), and the vertical axis represents the number of pixels the same as in Fig. 10, and the distribution of the pixels (histogram) is shown by line 222. As shown in this figure, a peak of line 222 is formed in a portion of the left side of the figure in which the brightness value is low by a low-brightness background, a peak of line 222 is formed proximate to the center of the figure by the obstacle (snow), and a peak of line 222 is formed in a portion of the right side of the figure in which the brightness value is high by a high-brightness background.

Unlike during a heavy snowfall, since an object other than snow (background) is displayed more clearly in the image in the case of a light snow, the shape of line 222 becomes complex (for example, the number of peaks increase), and there is a high likelihood that pixels of an image of a high-brightness background will also be included in the pixels within the threshold range. Thus, when the output of the respective pixels is not concentrated at a fixed level, the threshold range must be enlarged, making it impossible to set an appropriate threshold (for example, threshold b) for distinguishing between the background and the obstacle.

For this reason, since there is a possibility that a high-brightness background is mistakenly detected as the obstacle in use of the obstacle detection methods of either mode A or mode B, mode C processing is executed instead of either mode A or mode B processing. That is, a determination is made in Step S143 of Fig. 7 that mode C is set, processing proceeds to Step S146, and mode C processing is executed.

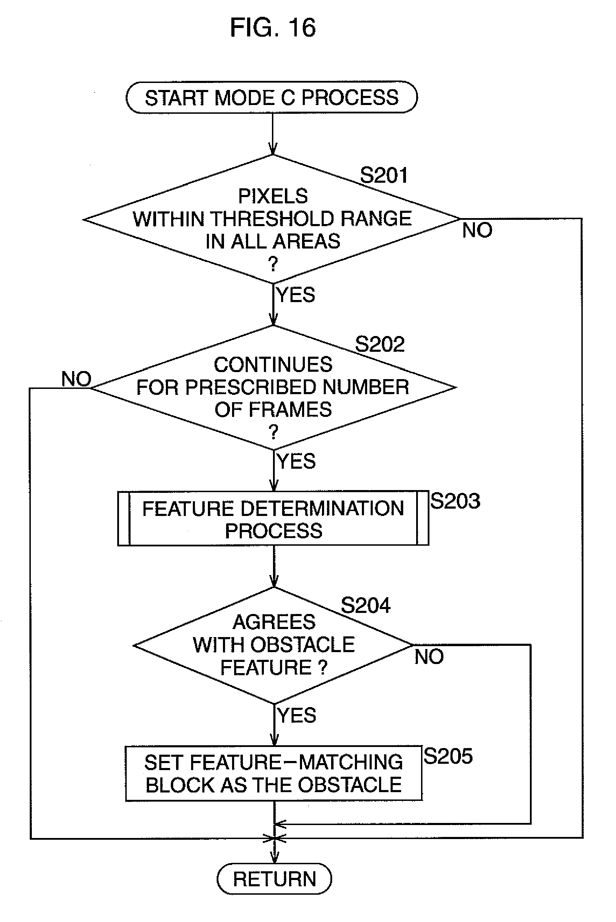

The mode C processing of Step S146 of Fig. 7 will be explained in detail by referring to the flowchart of Fig. 16.

Since the processing of Steps S201 and S202 are the same processing as that of Steps S181 and S182 of Fig. 12, detailed explanations will be omitted. When it is determined in Step S202 that a state in which pixels within the threshold range exist in all the areas continues for a prescribed number of frames, processing proceeds to Step S203, and feature determination processing is executed.

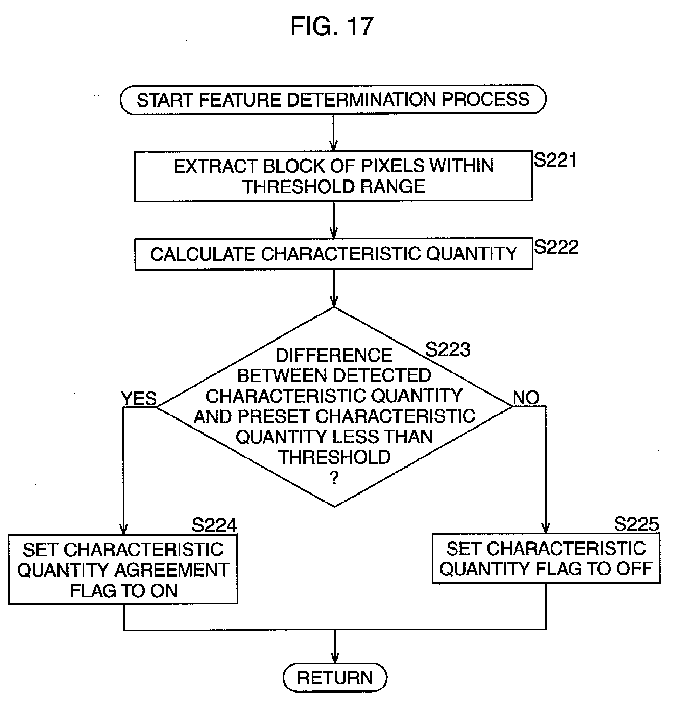

The feature determination processing of Step S203 of Fig. 16 will be explained in detail here by referring to the flowchart of Fig. 17.

In Step S221, the obstacle detector 162 extracts a block made up of pixels in the image within the threshold range.

In Step S222, the obstacle detector 162 calculates the characteristic quantity of the block extracted in Step S221. At this time, for example, Laplacian conversion is carried out for this pixel block, and the fact that the shape of the block approximates a granular shape is calculated as a numerical value. Furthermore, it is supposed that a reference value for determining that the shape approximates a granular shape is stored in the obstacle registry 165.

And/or, a check is made to ascertain that the surface area corresponding to the block in the image is less than a prescribed percentage of the entire image (the size occupied in the image is small). For example, based on the results of analysis of previously taken images, the percentage of the overall image occupied by a snowflake is set at a fixed value in accordance with the angular field of view of the lens 101a, and the percentage of the surface area of the block extracted in Step S221 is calculated by quantifying how close it is to the preset value. Furthermore, the color of the pixel block can also be calculated by quantifying how close it is to white, the color of snow. Furthermore, it is supposed that the threshold and other such values required to calculate these numerical values have been stored in the obstacle registry 165 beforehand.

In Step S223, the obstacle detector 162 computes the difference between the characteristic quantity calculated in Step S222 and a preset characteristic quantity stored in the obstacle registry 165, and determines if this difference is less than a threshold. Furthermore, it is supposed that this threshold is for determining the degree of agreement between the characteristic quantity of the noted pixel block and the characteristic quantity of the obstacle, and, for example, that this threshold is stored in the obstacle registry 165 beforehand.

When it is determined in Step S223 that the difference between the characteristic quantity calculated by Step S222 and the preset characteristic quantity stored in the obstacle registry 165 is less than the threshold, the block extracted in Step S221 is considered to approximate the features of snow, and therefore processing proceeds to Step S224, and the obstacle detector 162 sets the characteristic quantity agreement flag denoting characteristic quantity agreement to ON for the block extracted in Step S221.

Conversely, when it is determined in Step S223 that the difference between the characteristic quantity calculated by Step S222 and the preset characteristic quantity stored in the obstacle registry 165 is greater than the threshold, the block extracted in Step S221 is considered not to have the feature of snow, and therefore, processing proceeds to Step S224, and the obstacle detector 162 sets the characteristic quantity agreement flag to OFF for the block extracted by Step S221.

Feature determination processing is carried out in this way.

Returning to Fig. 16, subsequent to the processing of Step S203, in Step S204, the obstacle detector 162 determines whether or not the individual blocks for which this feature was determined in Step S203 agree with the obstacle feature. The determination as to whether or not there is agreement with the obstacle feature is carried out here based on the above-mentioned characteristic quantity agreement flag.

When it is determined in Step S204 that there is agreement with the obstacle feature, processing proceeds to Step S205, and the obstacle detector 162 sets the pixels corresponding to these blocks as the obstacle. Conversely, when it is determined in Step S204 that there is no agreement with the obstacle feature, the processing of Step S205 is skipped.

The obstacle is detected in this way. Since the feature determination is carried out for a block of pixels within the threshold range, it is possible to deter mistakenly detecting a high-brightness background as the obstacle, for example, even when it is snowing lightly. Furthermore, it is also possible to omit the processing of either Step S201 or Step S202, and to carry out obstacle detection based on the results of feature determination.

And/or, the obstacle can also be detected by processing that differs from that described hereinabove by referring to Figs. 7 through 17. For example, there may be occasions when the user, who is actually driving the automobile, does not always feel that it is necessary to remove all of the snow in the image. There could be times when removing only the portions of snow that are reflected in the headlights in the image can adequately ensure the field of view. In a case such as this, it is possible to specify the brightness of the snow, which markedly obscures the field of view, by analyzing the image of snow reflected in the headlights beforehand, setting a threshold based on this brightness (for example, a threshold that is slightly higher than threshold a of Fig. 10), and detecting all pixels of a brightness greater than the threshold as the obstacle. That is, the obstacle detection processing of Fig. 7, for example, can also be processing by which pixels of a brightness of greater than the threshold are detected in Step S142, and all detected pixels are set as the obstacle.

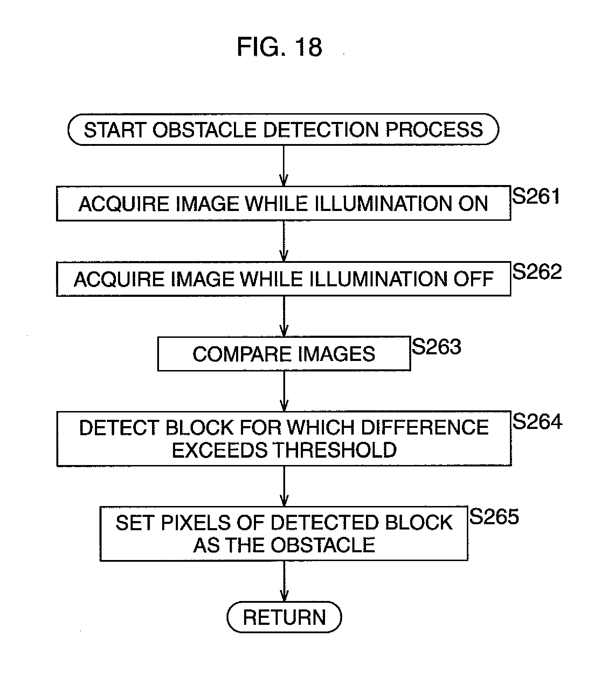

However, in most cases the deterioration of a driver's field of view when it is snowing is the result of the light emitted from lighting fixtures, such as the headlights of the automobile, reflecting off the snow. Therefore, since turning off the headlights when it is snowing can actually improve the field of view, a method for detecting the obstacle by making use of the characteristics of this kind of field of view is also possible. Another example of obstacle detection processing will be explained by referring to the flowchart of Fig. 18.

In Step S261, the obstacle detector 162 acquires an image obtained by the image pickup unit 101 when the headlights and other illumination are turned ON. In Step S262, the obstacle detector 162 acquires an image obtained by the image pickup unit 101 when the headlights and other illumination are turned OFF.

Control can be implemented at this time such that the headlights are turned ON and OFF in synch with the timing of the imaging, but if headlights constituting LEDs (Light Emitting Diodes) are used, the LEDs will repeatedly turn ON and OFF at a prescribed interval, and therefore, if images are acquired from the image pickup unit 101 in synch with this interval, it will not be necessary to control the turning ON and OFF of the headlights.

Further, the obstacle can be more readily detected if the irradiation direction of the headlights is aimed slightly upwards from the normal irradiation direction at this time.

In Step S263, after processing the respective images acquired by the processing of Steps S261 and S262 so that the average values of the overall brightness of the two images become the same in order to exclude the affects of the illumination either being turned ON or OFF, for example, the obstacle detector 162 calculates and compares the differences of the pixel values. Then, in Step S264, the obstacle detector 162 detects a block of pixels for which the difference exceeds the threshold.

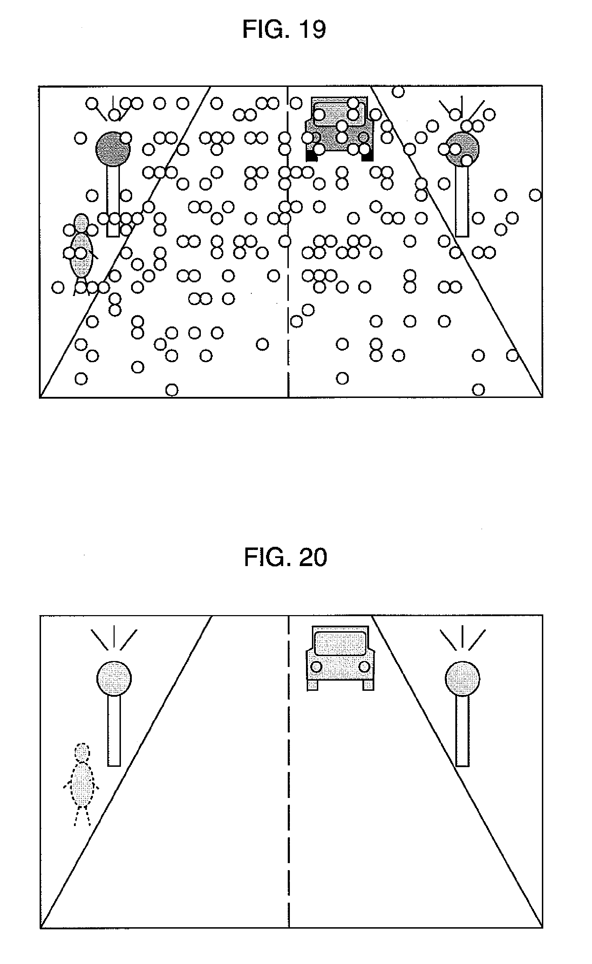

Figs. 19 and 20 are diagrams showing examples of images acquired in Steps S261 and S262. For example, it is supposed that when the headlights and other such illumination are turned ON in Step S261, an image like that shown in Fig. 19 is acquired as the image obtained by the image pickup unit 101, and when the headlights and other illumination are turned OFF in Step S262, an image like that shown in Fig. 20 is acquired as the image obtained by the image pickup unit 101.

In Fig. 19, snow reflected in the headlights is clearly displayed in the entire image, but since the snow is not reflected in the headlights in Fig. 20, the oncoming vehicle, street lights, and pedestrian are displayed more clearly than in Fig. 19. For example, if, after converting
all the pixel values (brightness values) in Fig 20 uniformly high, and carrying out processing in both the Fig. 19 image and the Fig. 20 image so that the average values of the overall brightness become the same, the obstacle detector 162 calculates and compares the differences of the pixel values, a pixel block corresponding to the snow in Fig. 19 is detected as a noticeable difference (for example, the difference exceeds the threshold).

Since the quantity of light irradiated on the subject (the scene forward of the automobile) will differ greatly when the headlights are turned ON and OFF, for example, shooting an image when the headlights are turned ON and obtaining an image when the headlights are turned OFF with a camera that uses an imaging device with a low dynamic range, such as a CCD, will result, on the one hand, in the light portions of the subject being whited out, and on the other hand, in the dark portions of the subject being blackened out.

By contrast, in the image pickup unit 101, which uses an HDRC imaging controller 121 like that described above, since brightness clipping, whereby a pixel value corresponding to a light portion of a subject is clipped to the maximum value of the pixel value capable of being outputted by the imaging device, and a pixel value corresponding to a dark portion of a subject is clipped to the minimum value of the pixel value capable of being outputted by the imaging device, does not occur even if the incident quantity of light is not adjusted by adjusting the diaphragm or shutter speed, the image pickup unit 101 can faithfully image minute changes in the brightness of the subject. As a result, the pixels of the snow, which are reflected in the headlights and become noticeably brighter in the image of Fig. 19, can be detected as a striking difference relative to the image of Fig. 20.

Accordingly, in Step S264, the obstacle detector 162 sets the block detected by the processing of Step S263 (that is, the block of pixels corresponding to the snow in Fig. 19) as the obstacle.

For example, if the block of pixels corresponding to the snow, which has been set as the obstacle based on the image of Fig. 19, is removed, it is possible to provide a good field of view like that shown in Fig. 21.

Obstacle detection can also be carried out in this way.

By doing so, for example, it is possible to deter a driver from turning OFF the headlights and creating a dangerous driving situation in order to improve his field of view in the forward direction.

That is, there are times when, despite the fact that the scene in front of the automobile is not dark, the sky is light, and the road is being illuminated, when the driver turns the headlights ON, the snow lit up by the headlights becomes blinding. This kind of situation is especially likely during the evening hours when it is just turning dark, and it is a heavy snowfall with lots of snowflakes. Under these circumstances, the forward field of vision improves if the headlights are turned OFF, but this is dangerous because it makes the automobile difficult to detect by oncoming traffic. In a situation like this, the driver can be cautioned not to turn OFF the headlights.

For example, when it is snowing, and the driver turns the headlights OFF despite the fact that it is getting dark, the control unit 102 can output a voice signal of a danger warning message to the automobile's onboard speaker, to the effect "It is getting dark, and turning the headlights OFF could be dangerous. Please look at the image on the display unit 103", thereby encouraging the driver to turn ON the headlights.

Furthermore, a situation in which snow being lit up by the headlights is seen as being blinding like this comes about when the brightness of the obstacle when the headlights are OFF is not that much different from the surrounding brightness, and, depending on the case, if not removing the snow, which is the obstacle, is felt to be more natural, and there is no great loss of visibility, the driver may prefer that the snow be displayed on the display unit 103. In a situation like this, of the images of the data outputted from the image pickup unit 101, the control unit 102 can display on the display unit 103 only the image of a state wherein the headlights are OFF, one in which the image at the instant the headlights are turned ON is excluded and the snow has not been removed. The driver can select each time whether or not the obstacle (snow) is to be removed, and the present invention can be constituted such that an image, from which the obstacle has not been removed, is automatically displayed when the brightness of the obstacle in the state in which the headlights are OFF does not differ much from the surrounding brightness.

Obstacle detection has been explained up until this point, but as for the pixels corresponding to the obstacle detected by the processing, which was described hereinabove by referring to Fig. 7, for example, information intrinsic to these pixels is individually specified by two-dimensional coordinate values inside the image, and the specified pixel information is outputted to the movement status controller 163 and obstacle removal processor 164.

Next, the obstacle removal process of Step S104 of Fig. 5 will be explained in detail by referring to the flowchart of Fig. 22.

In Step S301, the obstacle removal processor 164 acquires the image of the frame that is chronologically previous to the frame of the image to be corrected. In Step S302, the obstacle detector 162 detects the portion (block) corresponding to the block of pixels, which was established as the obstacle, in the image of the chronologically previous frame acquired by the processing of Step S301, as the portion to be replaced in the image of the frame to be corrected. Then, in Step S303, the obstacle removal processor 164 replaces the block of pixels established as the obstacle in the frame image to be corrected with the pixels of the block detected by the processing of Step S302.

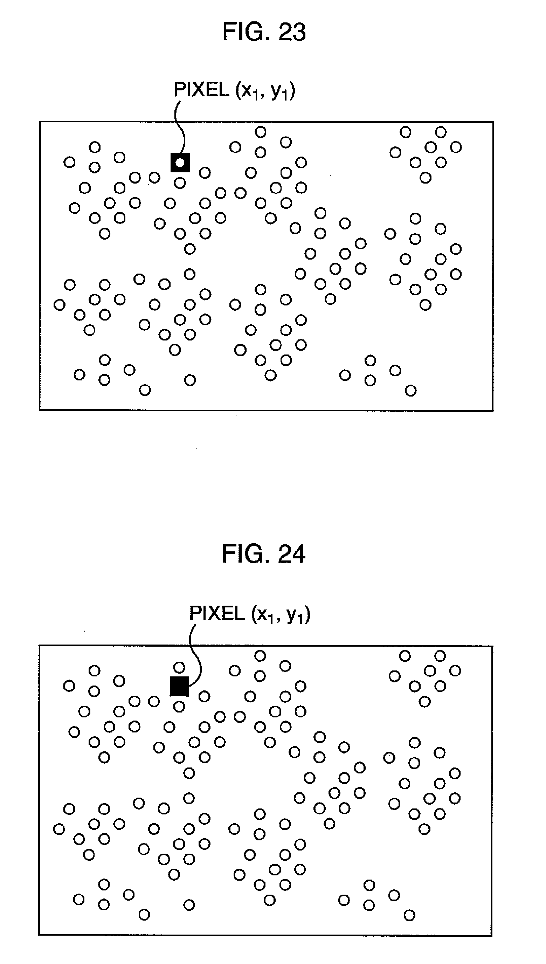

The obstacle removal process will be explained in further detail by referring to Figs. 23 through 25. For example, when the frame of the image to be corrected is the nth frame as shown in Fig. 23, it is supposed that the pixels corresponding to the obstacle (snow) in this image is a block made up of pixels surrounding the pixel (x1,y1). Here, it is supposed that (x1, y1) denotes coordinates on the x axis and y axis in the image.

In Step S301, for example, the image of a frame like that shown in Fig. 24 is acquired as the frame chronologically previous to the nth frame. In Step S302, the obstacle detector 162 detects the portion corresponding to the block of pixels established as the obstacle in the image of the frame to be corrected (Fig. 23) in the image of Fig. 24, that is, the block centered on the pixel (x1, y1) of Fig. 24, as the replacement portion. Furthermore, the fact that snow is not comprised in the block centered on the pixel (x1, y1) of Fig. 24 is checked beforehand, and this block is detected as the replacement portion. Then, in Step S303, the snow of Fig. 23 is removed by being replaced with the block centered on the pixel (x1, y1) of Fig. 24.

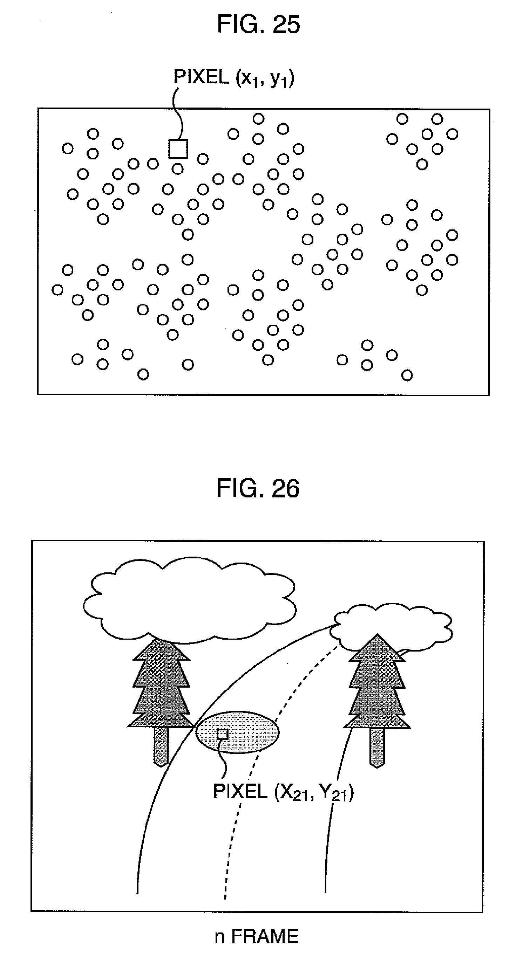

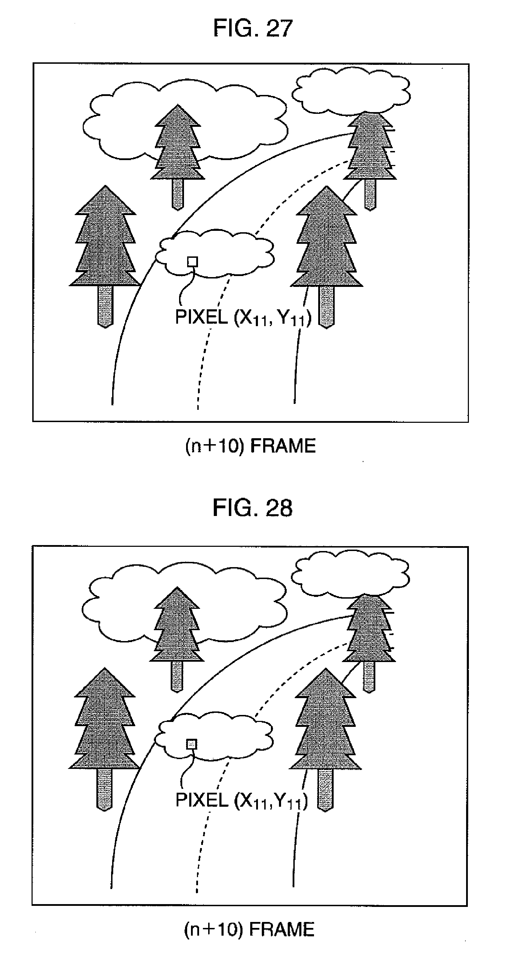

Furthermore, when the automobile is moving (traveling), the replacement portion is detected in accordance with the movement status controller 163 taking image movement into account. For example, when the automobile is moving forward, after obtaining an image like that shown in Fig. 26 as the image of the nth frame, an image like that shown in Fig. 27 is obtained as the image of the (n + 10)th frame. Since the automobile is moving forward, the objects (for example, the trees of both sides of the road) displayed near the center of the figure in the vertical axis direction in Fig. 26 are displayed slightly lower in the vertical axis direction of the figure in Fig. 27 compared to Fig. 26 because these object come closer in line with the movement of the automobile.

The frame of the image to be corrected now is the (n + 10)th frame of Fig. 27, and when the image of the chronologically previous frame acquired in Step S301 is the image of the nth frame of Fig. 26, the pixel (pixel x11, y11) established as the obstacle in Fig. 27 cannot be replaced with the pixel (pixel x11, y11) of the same location in the image of Fig. 26. For this reason, the movement status controller 163 extracts a prescribed block inside the image, computes a movement vector, and detects the fact that (pixel x11, y11) of the image of Fig. 27 corresponds to pixel (x21, y21) of Fig. 26, and communicates same to the obstacle removal processor 164.

Then, in Step S303, the block centered on the pixel (pixel x11, y11) established as the obstacle in Fig. 27 is replaced with the block centered on the pixel (x21, y21) of Fig. 26 as shown in Fig. 28.

Returning to Fig. 22, after carrying out processing in Step S303 for replacing all the pixel blocks established as the obstacle in the image of the frame to be corrected, in Step S304, the obstacle removal processor 164 generates a signal of the corrected image based on this image, and outputs same to the display unit 103. As a result of this, for example, the snow, which is the obstacle, is removed from the image shown in Fig. 19, and a corrected image like that shown in Fig. 21 is displayed. That is, an image (Fig. 21) of a state in which the snow has been eliminated from the image shown in Fig. 19 is generated virtually.

The obstacle in the image is removed in this way. By so doing, the user (for example, the driver), who is viewing the display unit 103, can observe an image in which it appears that the currently falling snow has been completely eliminated. Therefore, it is possible to provide an image of a pleasant field of view.

The preceding explains examples in which a monitoring apparatus 100 is mounted in an automobile, but the monitoring apparatus 100 can also be installed in ski resorts and other such venues where it snows a lot. When the monitoring apparatus 100 is installed in a ski resort or the like, the monitoring apparatus 100 does not move, thereby eliminating the need to provide a movement status controller 163.

Furthermore, when the monitoring apparatus 100 is installed in a place where there is always a lot of snow, or a place that is illuminated, it is possible to identify the obstacle snow in the obtained images without a high dynamic range for the brightness values, thereby making it possible for the imaging controller 121 of the image pickup unit 101 to be constituted by a CCD imaging device or CMOS imaging device, enabling the monitoring apparatus 100 to be constituted without using an HDRC or other such logarithmic conversion-type imaging device. When the dynamic range of an image obtained by the image pickup unit 101 is low, for example, only threshold a (lower limit threshold) of Fig. 10 is set as the threshold for distinguishing between the obstacle and the background, it is considered highly likely that a pixel having a value greater than the threshold is the obstacle, and obstacle detection processing can be carried out as described above by referring to Fig. 7.

The preceding explains examples of cases in which one image pickup unit was provided in the monitoring device, but it is also possible to provide a plurality of image pickup units in the monitoring device.

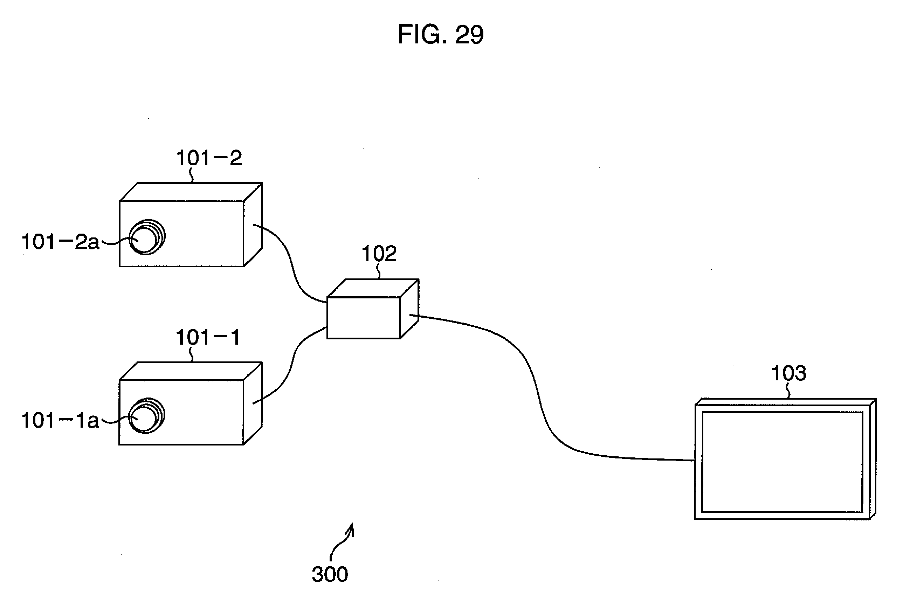

Fig. 29 is a block diagram showing an example of another constitution of a monitoring device, which applies the present invention. In the monitoring apparatus 200 of this figure, since the blocks assigned the same numerals as those of the monitoring apparatus 100 of Fig. 1 are the same blocks as those of Fig. 1, detailed explanations of these blocks will be omitted. Image pickup unit 101-1 and image pickup unit 101-2, which differ from the example of Fig. 1, are provided in the example of Fig. 29 as image pickup units.

When the monitoring apparatus 200 is mounted in an automobile or the like, for example, image pickup unit 101-1 and image pickup unit 101-2 are respectively mounted in the front grill or other such part of the automobile in locations, which are the same height from the ground and separated left and right by a prescribed spacing. That is, image pickup unit 101-1 and image pickup unit 101-2 are mounted such that an image corresponding to the light entering by way of the lens 101-1a of the image pickup unit 101-1, and an image corresponding to the light entering by way of the lens 101-2a of the image pickup unit 101-2 become images, which have parallax. Furthermore, if the constitution can be made such that appropriate parallax exists between the respective images pickup by image pickup unit 101-1 and image pickup unit 101-2, image pickup unit 101-1 and image pickup unit 101-2 can be mounted in locations other than the mounting locations described hereinabove.

In the obstacle removal process described hereinabove by referring to Fig. 22, the explanation gave an example in which the image of the frame chronologically previous to the frame of the image to be corrected is acquired, and the obstacle is removed using a block of pixels of the chronologically previous frame. In this case, when the automobile is traveling as described above, the block to be utilized in the chronologically previous frame (the replacement portion) is detected in accordance with the movement status controller 163 taking into account the movement of the image, but, for example, when the automobile is traveling along a winding road with a series of sharp curves, the orientation of the automobile changes dramatically often over the course of time, and the images obtained by the image pickup unit 101 change greatly in a relatively short period of time. Under circumstance such as this, the image of a frame a prescribed period of time prior to the frame of the image to be corrected, for example, could show a subject, which differs from the image of the frame to be corrected, and there may be times when the same image (one which makes practically the same impression on the observer) is no longer possible, and it is not considered appropriate to remove the obstacle by replacing the obstacle with a block of pixels of the chronologically previous frame.

By contrast, in monitoring apparatus 200, since different (parallax) images, which are obtained by two image pickup units are acquired simultaneously, the image picked up by the one image pickup unit can be corrected by the image picked up by the other image pickup unit. By so doing, for example, the obstacle can be appropriately removed even when traveling along a winding road or the like.

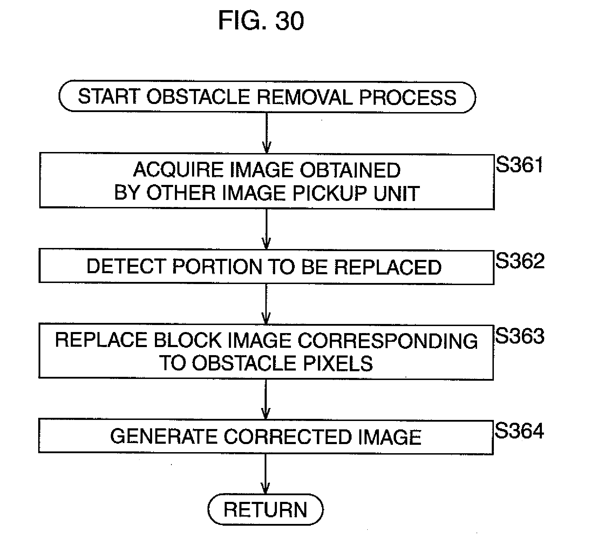

An example of an obstacle removal process in which monitoring apparatus 200 corrects an image picked up by the one image pickup unit by using an image picked up by the other image pickup unit at the same timing, is described in Fig. 30.

Fig. 30 is another example of the obstacle removal process, and is a flowchart for explaining an example of an obstacle removal process executed by the above-mentioned monitoring apparatus 200. It is supposed here that images picked up mainly by image pickup unit 101-1 in the monitoring apparatus 200 are displayed on the display unit 103.

In Step S361 of this figure, the obstacle removal processor 164 acquires an image picked up by the other image pickup unit (In this case, image pickup unit 101-2). Furthermore, this image was picked up by image pickup unit 101-2 at the same timing as the image (image to be corrected) picked up by image pickup unit 101-1.

In Step S362, the obstacle detector 162 detects in the image acquired by the processing of Step S361 a portion (block), which corresponds to a block of pixels established as the obstacle in the image to be corrected, as the replacement portion.

In this case, the image acquired in Step S361 was picked up at the same timing as the image to be corrected, and constitutes an image, which has parallax with the image to be corrected. Thus, on the one hand, the image acquired in Step S361 is an image comprising the same objects as the image to be corrected, and will make practically the same impression on the observer, and on the other hand, is an image in which the same object shows up in a slightly different location than the location (coordinates) of the object in the image to be corrected. That is, when removing an obstacle, which is quite small, such as falling snow, there is an extremely low likelihood that snow will also show up in the image picked up by image pickup unit 101-2 in the same coordinate location as the coordinate location of the portion where there is snow in the image to be corrected picked up by image pickup unit 101-1. Further, the likelihood that an object, which is not in the image acquired by the processing of Step S361, will show up in the proximity of the portion where there is snow in the image to be corrected, is also extremely low.

Therefore, for example, when the portion in which snow shows up in the image to be corrected is made up of pixels surrounding the central pixel (x1, y1), replacing the quite small surface area block made up of the pixels surrounding the central pixel (x1, y1) in the image to be corrected with the same surface area block made up of pixels surrounding the central pixel (x1, y1) in the image acquired in Step S361 makes it possible to generate a natural image in which only the snow, which is the obstacle, is removed from the image to be corrected. In Step S363, a block image corresponding to the pixels of the obstacle are replaced as described above.

Then, in Step S364, a corrected image, from which the obstacle has been removed via the processing of Step S363, is generated.

An image from which the obstacle has been removed is generated in this way. By so doing, the obstacle can be easily removed when the automobile is traveling without image movement being taken into account by the movement status controller 163, and it is possible to correct an image so that a natural image is displayed at all times even when traveling along a winding road.

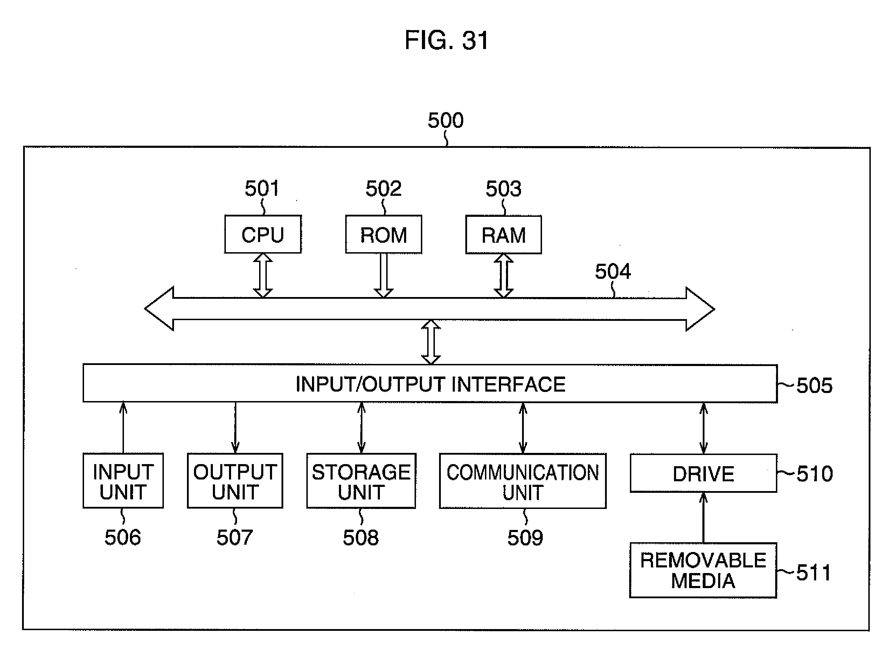

Furthermore, the above-described series of processes can be realized via hardware or software. When the above-described series of processes are realized using software, the programs constituting this software are installed over a network or from a recording medium into either a computer, which is embedded in dedicated hardware, or, for example, a general-purpose personal computer 500 like that shown in Fig. 31, which is capable of executing a variety of functions by installing various programs.

In Fig. 31, the CPU (Central Processing Unit) 501 executes a variety of processes in accordance with either programs stored in ROM (Read Only Memory) 502, or programs loaded into RAM (Random Access Memory) 503 from a storage unit 508. The data and so forth, which the CPU 501 needs to execute the various processes, is also arbitrarily stored in RAM 503.

The CPU 501, ROM 502 and RAM 503 are interconnected via a bus 504. This bus 504 is also connected to an input/output interface 505.

An input unit 506 comprising a keyboard, mouse or the like, an output unit 507 comprising a display, which is made up of a CRT (Cathode Ray Tube), LCD (Liquid Crystal Display) or the like, as well as a speaker or the like, a storage unit 508 constituting hard disks, and a communication unit 509 constituting a modem, and a LAN card or other such network interface card, are connected to the input/output interface 505. The communication unit 509 carries out communication processing via a network comprising the Internet.

A drive 510 is also connected to the input/output interface 505 as needed, a removable media 511, such as a magnetic disk, optical disk, magneto-optical disk, or semiconductor memory, is arbitrarily mounted, and computer programs read out therefrom are installed in the storage unit 508 as necessary.

When executing the above-described series of processes using software, the programs constituting this software are installed over a network, such as the Internet, or from a recording medium comprising the removable media 511.

Furthermore, this recording medium constitutes removable media 511 comprising a magnetic disk (including a floppy disk (registered trademark)), optical disk (including CD-ROM (Compact Disk-Read Only Memory), and DVD (Digital Versatile Disk)), magneto-optical disk (including MD (Mini-Disk) (registered trademark)), or semiconductor memory on which programs are recorded, which are separate from the body of the apparatus shown in Fig. 31, and are distributed for delivering programs to a user. The recording medium can also be constituted by ROM 502, or a hard disk comprised in the storage unit 508, which are incorporated beforehand in the main body of the apparatus, and on which are stored programs, which are delivered to a user.

Of course, the steps for executing the series of processes described above in this specification comprise processing, which is carried out chronologically in line with a disclosed sequence, but these steps also comprise processing, which is not necessarily processed chronologically, but rather is carried out in parallel or individually.

## Claims

1. An image processing apparatus, comprising:
imaging means for obtaining an image and outputting data on the obtained image;
correction determination means for determining whether or not to carry out correction for the image data outputted from the imaging means;
detection means for detecting a pixel corresponding to an obstacle, which is in the image data, and which is a prescribed object either floating in or falling through the air;
replacement means for replacing the pixel of the obstacle in the image data, which is detected by the detection means, with another pixel; and
output means for outputting the image data in which the obstacle pixel has been replaced with the other pixel by the replacement means.

2. The image processing apparatus according to Claim 1, wherein the imaging means converts an electric charge, which is generated in response to obtained light, to an analog electric signal having a voltage value proportional to the logarithm of the number of charges for each pixel, and outputs the image data by converting the analog electric signal to digital data.

3. The image processing apparatus according to Claim 1, wherein the imaging means converts an electric current, which is generated in response to obtained light, to an analog electric signal having a voltage value proportional to the logarithm of the size of the electric current for each pixel, and outputs the image data by converting the analog electric signal to digital data.

4. The image processing apparatus according to Claim 1, wherein the detection means detects a pixel corresponding to the obstacle based on a brightness value of the pixel of the image data, and a preset threshold.

5. The image processing apparatus according to Claim 4, wherein the threshold is upper limit and lower limit threshold values of the brightness value for distinguishing between a pixel corresponding to the obstacle and a pixel corresponding to a background in the image data, and
the detection means detects a pixel having a brightness value within the threshold range as a pixel corresponding to the obstacle.

6. The image processing apparatus according to Claim 5, wherein the detection means divides the image into a plurality of areas, and when pixels having a brightness value within the threshold range exist in the image data of all the divided areas, detects the pixels having a brightness value within the threshold range as pixels corresponding to the obstacle.

7. The image processing apparatus according to Claim 5, wherein, when pixels having a brightness value within the threshold range exist in the image data of all the frames of a plurality of frames obtained by the imaging means, the detection means detects pixels having a brightness value within the threshold range as pixels corresponding to the obstacle.

8. The image processing apparatus according to Claim 5, wherein the detection means calculates a characteristic quantity of data of a block centered on a pixel having a brightness value within the threshold range, and computes difference between the calculated characteristic quantity and the characteristic quantity of data of a block of pixels corresponding to a pre-stored obstacle, and when the difference is less than a preset value, detects a block centered on a pixel having a brightness value within the threshold range as a block of pixels corresponding to the obstacle.

9. The image processing apparatus according to Claim 1, wherein the replacement means replaces a pixel detected by the detection means with a pixel corresponding to the pixel detected by the detection means in an image of a frame, which is the image of a frame obtained by the imaging means, and which is chronologically previous to the frame in which the pixel is to be replaced.

10. The image processing apparatus according to Claim 9, further comprising specification means for specifying a location of a pixel corresponding to a pixel detected by the detection means in an image of a frame, which is an image of a frame obtained by the imaging means, and which is chronologically previous to the frame in which the pixel is to be replaced, and
replacement means replaces the pixel detected by the detection means with a pixel specified by the specification means.

11. The image processing apparatus according to Claim 1, further comprising other imaging means, wherein
replacement means replaces a pixel detected by the detection means with a pixel corresponding to the pixel detected by the detection means in an image, which is an image obtained by the other imaging means, and which is obtained at the same timing as the image in which the pixel is to be replaced.

12. An image processing method, comprising:
a correction determination step of determining whether to carry out correction for image data outputted from imaging means, which obtains an image and outputs the obtained image data;
a detection step of detecting a pixel corresponding to an obstacle, which is in the image data, and which is a prescribed object either floating in or falling through the air when determination has been made by processing of the correction determination step that correction should be carried out for the image data;
a replacement step of replacing a pixel of the obstacle in the image data detected by the processing of the detection step with another pixel; and
an output step of outputting image data for which the pixel of the obstacle has been replaced with another pixel by the processing of the replacement step.

13. A program for causing an image processing apparatus to carry out image processing, the program causing a computer to execute:
a correction determination control step of controlling determination as to whether to carry out correction for image data outputted from imaging means, which obtains an image and outputs data on the obtained image;
a detection control step of controlling detection of a pixel corresponding to an obstacle, which is in the image data, and which is a prescribed object either floating in or falling through the air when determination has been made by processing of the correction determination control step that correction should be carried out for the image data;
a replacement control step of controlling replacement of the pixel of the obstacle in the image data detected by processing of the detection step with another pixel; and
an output control step of controlling output of image data for which the pixel of the obstacle has been replaced with another pixel by processing of the replacement control step.

14. A recording medium on which a program for causing an image processing apparatus to carry out image processing is recorded, the recording medium storing the program causing a computer to execute:
a correction determination control step of controlling determination as to whether to carry out correction for image data outputted from imaging means, which obtains an image and outputs data on the obtained image;
a detection control step of controlling detection of a pixel corresponding to an obstacle, which is in the image data, and which is a prescribed object either floating in or falling through the air when determination has been made by processing of the correction determination control step that correction should be carried out for the image data;
a replacement control step of controlling replacement of the pixel of the obstacle in the image data detected by processing of the detection step with another pixel; and
an output control step of controlling output of image data for which the pixel of the obstacle has been replaced with another pixel by processing of the replacement control step.

15. An image processing apparatus, comprising:
imaging means for obtaining an image when illumination for irradiating light onto a subject is ON an image when the illumination is OFF, and for outputting data on the obtained image;
correction determination means for determining whether to carry out correction for the image data outputted from the imaging means;
correction means for correcting the image data based on image data obtained when illumination for irradiating light on a subject to be obtained by the imaging means is ON, and image data obtained when the illumination is OFF; and
output means for outputting the image data corrected by the correction means.

16. The image processing apparatus according to Claim 15, wherein the correction means corrects the image data so that, from among the image data obtained when the illumination for irradiating light onto a subject to be obtained by the imaging means is ON and the image data obtained when the illumination is OFF, the image data obtained when the illumination is OFF is outputted to output means.

17. The image processing apparatus according to Claim 15, further comprising detection means for detecting a pixel corresponding to an obstacle, which is in the image data, and which is a prescribed object either floating in or falling through the air, wherein
the detection means, based on the image data obtained when illumination for irradiating light on a subject to be obtained by the imaging means is ON and the image data obtained when the illumination is OFF, computes difference between brightness values of the respective corresponding pixels in both sets of image data, and detects pixels for which the difference in brightness values exceeds a preset value as being pixels corresponding to the obstacle, and
the correction means replaces the pixels of the obstacle in the image data detected by the detection means with other pixels.

18. An image processing method, comprising:
a correction determination step of determining whether to carry out correction for image data outputted from imaging means, which obtains an image when illumination for irradiating light onto a subject is ON and an image when the illumination is OFF, and outputs data the obtained images;
a correction step of correcting the image data based on image data obtained when illumination for irradiating light on a subject to be obtained by the imaging means is ON and image data obtained when the illumination is OFF, when determination has been made by processing of the correction determination step that correction is to be performed for the image data; and
an output step of outputting the image data corrected by processing of the correction step.

19. A program for causing an image processing apparatus to carry out image processing, the program causing a computer to execute:
a correction determination control step of controlling determination as to whether to carry out correction for image data outputted from imaging means, which obtains an image when illumination for irradiating light onto a subject is ON and an image when the illumination is OFF, and outputs data of the obtained images;
a correction control step of controlling correction of the image data based on image data obtained when illumination for irradiating light on a subject to be obtained by the imaging means is ON and image data obtained when the illumination is OFF, when determination has been made by processing of the correction determination control step that correction should be carried out for the image data; and
an output control step of controlling output of the image data corrected by processing of the correction control step.

20. A recording medium on which a program for causing an image processing apparatus to carry out image processing is recorded, the recording medium storing the program for causing a computer to execute:
a correction determination control step of controlling determination as to whether to carry out correction for image data outputted from imaging means, which obtains an image when illumination for irradiating light onto a subject is ON and an image when the illumination is OFF, and outputs data on the obtained images;
a correction control step of controlling correction of the image data based on image data obtained when illumination for irradiating light on a subject to be obtained by the imaging means is ON and image data obtained when the illumination is OFF, when determination has been made by processing of the correction determination control step that correction should be carried out for the image data; and
an output control step of controlling output of the image data corrected by processing of the correction control step.
